# EUROPÄISCHE PATENTSCHRIFT

(11) **EP 1 412 440 B1**
(45) Veröffentlichungstag und Bekanntmachung des Hinweises auf die Patenterteilung: **07.09.2005**
(21) Anmeldenummer: 02791443.1
(22) Anmeldetag: 05.07.2002
(51) Int. Cl.: C09D 11/00, C09B 67/46

(54) **FARBMITTELZUBEREITUNGEN**
COLOURING PREPARATIONS
COMPOSITIONS DE COLORANT

(30) Priorität: 17.07.2001 DE 10133971
(43) Veröffentlichungstag der Anmeldung: 28.04.2004
(73) Patentinhaber: BASF Aktiengesellschaft, 67056 Ludwigshafen (DE)
(72) Erfinder: FREYBERG, Dieter, 67308 Einselthum (DE); RAULFS, Friedrich-Wilhelm, 68161 Mannheim (DE); SIEMENSMEYER, Karl, 67227 Frankenthal (DE)
(86) Internationale Anmeldenummer: PCT/EP2002/007488
(87) Internationale Veröffentlichungsnummer: WO 2003/011987

(56) Entgegenhaltungen:
- EP-A- 0 483 610
- EP-A- 0 649 888
- EP-A- 0 863 189
- EP-A- 1 041 127
- WO-A-01/44384
- WO-A-01/48101
- US-A- 5 364 461
- US-A- 5 688 311
- CHEMICAL ABSTRACTS, vol. 93, no. 5, 1980 Columbus, Ohio, US; abstract no. 45878d, STOILOV L. ET AL: "Products of the reaction of bromo-(2-hydroxyethoxy)alkanes with collidine in an ethylene glycol medium" XP002220983 & DOKL. BOLG. AKAD. NAUK., Bd. 32, Nr. 11, 1979, Seiten 1511-1513,
- J.S BRADSHAW ET AL: "Proton-ionizable crown compounds" J. HETEROCYCIC CHEMISTRY, Bd. 23, 1986, Seiten 1837-1843, XP002220982 HETEROCORPORATION. PROVO.; US

## Beschreibung

Die vorliegende Erfindung betrifft Farbmittelzubereitungen, welche folgende Bestandteile enthalten:
a) mindestens einen dispergierten, in Wasser schwerlöslichen Farbstoff,
b) Wasser,
c) mindestens ein Dispergiermittel und
d) eine Verbindung der allgemeinen Formel I 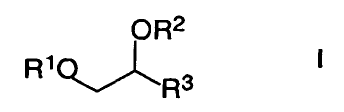
wobei in Formel I die Variablen wie folgt definiert sind:
- R¹, R²: unabhängig voneinander ausgewählt aus Wasserstoff,
(CH₂-CH₂-O)ₙH oder (CH(CH₃)-CH₂-O)ₙ-H, wobei n eine ganze Zahl von 1 bis 8 ist;
(CH₂-CH₂-O)ₐ-(CH(CH₃)-CH₂-O)_{b}-(CH₂-CH₂-O)_{c}-(CH(CH₃)-CH₂-O)_{d}-H, wobei a, b, c, d ganze Zahlen von 0 bis 7 sind und a + b + c + d ≤ 9.
- R³: ausgewählt aus
geradkettiges C₂-C₆-Alkyl,
C₆-C₁₄ Aryl, gleich oder verschieden substituiert mit Wasserstoff oder C₁-C₈-Alkyl
CH₂-O-R⁴ mit
- R⁴: ausgewählt aus C₁-C₁₀-Alkyl.

Weiterhin betrifft die Erfindung die Verwendung dieser Farbmittelzubereitungen als oder zur Herstellung von Tinten für das Ink-Jet-Verfahren sowie ein Verfahren zum Bedrucken von flächigen oder dreidimensional gestalteten Substraten, insbesondere textilen Substraten, im Ink-Jet-Verfahren, bei welchem die erfindungsgemäßen Farbmittelzubereitungen eingesetzt werden. Schließlich betrifft die vorliegende Erfindung Substrate, bedruckt mit den erfindungsgemäßen Tinten, beispielsweise nach dem Transferdruckverfahren.

An die Tinten, die beim Ink-Jet-Verfahren (Tintenstrahldruckverfahren wie Thermal Ink Jet, Piezo Ink Jet, Continuous Ink Jet, Valve Jet, Transferdruckverfahren) eingesetzt werden, werden eine Reihe von Anforderungen gestellt: Sie müssen zum Drucken geeignete Viskosität und Oberflächenspannung aufweisen, sie müssen lagerstabil sein, d.h., sie sollen nicht koagulieren oder flokulieren, und sie dürfen nicht zur Verstopfung der Druckerdüse führen, was insbesondere bei dispergierten, also nicht gelöste Farbmittelteilchen enthaltenden Tinten problematisch sein kann. Die Anforderungen an die Lagerstabilität dieser Tinten beinhaltet zusätzlich, dass sich die dispergierten Farbmittelteilchen nicht absetzen. Weiterhin müssen die Tinten im Falle des Continuous Ink Jet stabil gegen den Zusatz von Leitsalzen sein und bei Erhöhung des Ionengehaltes keine Tendenz zum Ausflocken zeigen. Außerdem müssen die erhaltenen Drucke den koloristischen Anforderungen genügen, d.h. hohe Brillanz und Farbtiefe zeigen, und gute Echtheiten, z.B. Reibechtheit, Lichtechtheit, Wasserechtheit und Nassreibechtheit, und gutes Trocknungsverhalten aufweisen.

Außerdem ist es erforderlich, dass die Tinten auf dem Substrat schnell trocknen, damit zu druckende Bilder oder Schriftzüge nicht verlaufen und sich beispielsweise die Tintentröpfchen verschiedener Farbe nicht vermischen. Dabei ist es zur Herstellung von gestochen scharfen Drucken erforderlich, dass nicht nur die Trocknungszeit der Drucke minimiert wird, sondern dass auch während der Zeit, in der die Tintentröpfchen auf dem zu bedruckenden Substrat stehen, diese Tröpfchen nicht verlaufen. Diese Fähigkeit der Tinte wird auch als Stand bezeichnet. Der Stand der bisher bekannten Tinten ist noch zu verbessern.

Aus der WO 99/01516 sind pigmenthaltige Ink-Jet-Tinten bekannt, die aus Arylsulfonsäure-Formaldehyd-Kondensationsprodukten oder oxalkylierten Phenolen gewählte Dispergiermittel enthalten. Der Stand der so erhältlichen Tinten ist jedoch noch verbesserungsfähig.

Aus US 5,141,556 sind wässrige Tinten und ihre Verwendung im Tintenstrahldruck bekannt, die einen Farbstoff oder ein dispergiertes Pigment enthalten sowie als Komponente c) Hexen-1,2-diol oder ein aliphatisches 1,2-Diol oder 1,3-Diol, wobei verzweigte 1,2-Diole bevorzugt sind. Der Stand der beschriebenen Tinten ist insbesondere für gestochen scharfe Bilder mit sehr feinen Linien jedoch nicht ausreichend.

In EP 0 649 888 werden Tintenzusammensetzungen für das Tintenstrahldruck-Verfahren beschrieben, die neben Wasser und einem Farbstoff Propylenglykolmono-n-butylether und/oder Dipropylenglykolmono-n-butylether enthalten sowie einen anderen wasserlöslichen Butylether. Die so erhältlichen Tinten ergeben gute Bilder auf recycliertem Papier; jedoch ist der Stand der Tintentröpfchen auf weniger saugfähigen Materialien unbefriedigend.

In US 5,364,461 wird ein Zusatz von 1,2-Pentandiol oder 1,2-Hexandiol zu Tinten mit in Wasser löslichen Farbstoffen beschrieben, der das Ausbluten von fertig gedruckten Bildern auf Substraten verhindert. Bei diesen Tinten mit wasserlöslichen Farbstoffen wird jedoch das Ausbluten durch einen Mechanismus gesteuert, der in US 5,116,409 beschrieben ist und sich grundsätzlich vom Mechanismus des Ausblutens bei in Wasser nicht oder nur wenig gelösten Farbmitteln unterscheidet.

US 5,688,311 offenbart die Zugabe von bestimmten Mengen an langkettigen Alkoholen, d.h. Alkoholen mit mindestens 8 C-Atomen wie beispielsweise Dodekan-1,2-diol, Dekan-2-ol und Oktanol, zu Tinten für das Ink-Jet-Verfahren. Die Zugabe bestimmter Mengen an langkettigen Alkoholen sei geeignet, die Sprenkelung beim Ink-Jet-Drucken zu vermeiden.

In Dokl.Bolg.Akad.Nauk Bd. 32, 1979, S.1511 (Übersetung aus: Chemical Abstracts vol.93, no.5, 1980) sind Verbindungen offenbart, die zur Synthese von Kronenethern geeignet sind und die n-C₈H₁₇-Reste tragen. In J.Heterocyclic Chem. 1986, 23, 1837 sind ähnliche Verbindungen offenbart, die n-C₆H₁₃, n-C₈H₁₇ oder n-C₁₀H₂₁-Reste tragen.

In US 5,531,815 werden Zusätze von 1,2-Alkandiolen zu Tinten beschrieben, in denen ein löslicher Farbstoff und eine Base mit zwitterionischer Betain-Struktur enthalten sind. Dabei erfüllt der Zusatz des 1,2-Diols zu der Base mit Betain-Struktur eine reduzierte Trocknungsdauer der fertigen Tinte auf papierenen Substraten. Jedoch hat ein Zusatz einer derartigen Kombination von Diol mit zwitterionischer Base keine Wirkung, wenn man eine Tinte mit Dispersfarbstoffen herzustellen wünscht.

EP 0 863 189 beschreibt den Zusatz von 8 bis 20 Gew.-% 1,2-Pentandiol oder 1,2-Hexandiol oder deren Mischungen zu Tinten, die einen löslichen Farbstoff enthalten.

Aus EP 0 892 025 sind wässrige Tinten für das Tintenstrahldruckverfahren bekannt, die einen wasserlöslichen Farbstoff enthalten und darüber hinaus eine Mikroemulsion, die mindestens eine wasserunlösliche organische Verbindung enthält, eine zweite organische Verbindung, die mit der wasserunlöslichen organischen Verbindung mischbar ist, beispielsweise 1,2-Pentandiolen, sowie mindestens einem Amphiphil. Diese Formulierungen sind jedoch nur für lösliche Farbstoffe sinnvoll. Die in vielen Fällen technisch vorteilhaften pigmentierten Tinten lassen sich in der angegebenen Weise nicht vorteilhaft formulieren.

EP 1 029 903 zeigt, dass Mischungen aus verzweigten Diolen wie beispielsweise 2-Methyl-2,4-pentandiol oder 1,2-Octandiol mit 3-Hexin-2,5-diol das Ausbluten von schwarzen pigmentierten Tinten in mit farbigen, auf Basis löslicher Farbstoffe formulierter Tinten bedruckte Papierflächen verhindert. Gewünscht ist jedoch, dass die Tinten auch auf weniger saugfähigen Substraten, beispielsweise Textilien, einen guten Stand besitzt.

EP-A 1 029 904 lehrt, dass Tinten mit guter Lagerstabilität dadurch erhalten werden, dass ein polymerer Latex in Verbindung mit einem Gemisch aus 1,2-Octandiol mit 3-Hexin-2,5-diol zur Formulierung gegeben wird.

Aus EP-A 1 041 127 sind wässrige Tinten für den TintenstrahlDruck bekannt, die neben einem oberflächenbehandelten Pigment und Glycerin sowie einem polyfunktionellen Alkohol oder einem Acetylenglykol ein Alkan-1,2-diol, ausgewählt aus 1,2-Butandiol, 1,2-Pentandiol und 1,2-Hexandiol, als Dispergiermittel enthält.

Tinten, bei denen als Farbmittel ein in Wasser schwerlöslicher Farbstoff, also ein Dispersfarbstoff oder ein Solvensfarbstoff, verwendet werden, zeichnen sich dadurch aus, dass sie besonders brillante Farben beim verdrucken auf Substrate, insbesondere auf textile Substrate, liefern. Die Farben sind bei der Anwendung des sogenannten Transferdruckverfahrens besonders brillant. Die bisher bekannten Tinten zeichnen sich jedoch durch einen verbesserungsbedürftigen Stand aus und dadurch, dass die Anschreibfähigkeit den Anforderungen oftmals nicht genügt. Ursache dafür sind große Kristalle der eingesetzten Farbmittel, die die Düsen der Drucker verstopfen und so zum Ausfall einzelner oder mehrerer Düsen führen. Im schlimmsten Fall wird der Druck streifig, oder einzelne Farben werden überhaupt nicht gedruckt.

Aufgabe der vorliegenden Erfindung war es, neue Farbmittelzubereitungen bereitzustellen, welche vorteilhafte Anwendung im Ink-Jet-Verfahren mit im Wesentlichen ungelösten Farbmitteln, beispielsweise mit Dispersfarbstoffen oder Solvensfarbstoffen finden können und insbesondere einen guten Stand aufweisen bei gleichzeitig gutem Schreibverhalten und akzeptabler Trockenzeit.

Demgemäß wurden die eingangs definierten Farbmittelzubereitungen gefunden.

Die erfindungsgemäßen Farbmittelzubereitungen enthalten einen in Wasser schwer löslichen, dispergierten Farbstoff a). Diese Farbstoffe werden auch als Dispers- oder Solventfarbstoffe bezeichnet. Wichtige Beispiele sind Azofarbstoffe und Anthrachinon-Farbstoffe.

Selbstverständlich können die erfindungsgemäßen Farbmittelzubereitungen auch Farbstoffmischungen enthalten, vorzugsweise liegt jedoch nur ein Farbstoff vor. Als Schönungsmfttel können diese Zubereitungen im Farbton dem Farbstoff ähnliche lösliche Farbstoffe, insbesondere Direkt-, Säure- oder Reaktivfarbstoffe enthalten.

Im folgenden sind Beispiele für geeignete Dispersfarbstoffe a) genannt, wobei Küpenfarbstoffe mit aufgeführt sind.

Rüpenfarbstoffe:
- C.I. Vat Yellow 2, 3, 4, 5, 9, 10, 12, 22, 26, 33, 37, 46, 48, 49 und 50;
- C.I. Vat Orange 1, 2, 5, 9, 11, 13, 15, 19, 26, 29, 30 und 31;
- C.I. Vat Red 2, 10, 12, 13, 14, 16, 19, 21, 31, 32, 37, 41, 51, 52 und 61;
- C.I. Vat Violet 2, 9, 13, 14, 15, 17 und 21;
- C.I. Vat Blue 1, 3, 5, 10, 12, 13, 14, 16, 17, 18, 19, 20, 22, 25, 26, 29, 30, 31, 35, 41, 42, 43, 64, 65, 66, 72 und 74;
- C.I. Vat Green 1, 2, 3, 5, 7, 8, 9, 13, 14, 17, 26, 29, 30, 31, 32, 33, 40, 42, 43, 44 und 49;
- C.I. Vat Brown 1, 3, 4, 5, 6, 9, 11, 17, 25, 32, 33, 35, 38, 39, 41, 42, 44, 45, 49, 50, 55, 57, 68, 72, 73, 80, 81, 82, 83 und 84;
- C.I. Vat Black 1, 2, 7, 8, 9, 13, 14, 16, 19, 20, 22, 25, 27, 28, 29, 30, 31, 32, 34, 36, 56, 57, 58, 63, 64 und 65;

Als Farbstoffe a), die im Wasser/Lösungsmittel-Gemisch schwer löslich sind, eignen sich neben den bereits genannten Küpenfarbstoffen insbesondere Azo-, Anthrachinon-, Chinophthalon-, Benzodifuran-, Methin- und Azamethinfarbstoffe, die frei von sauren bzw. ionischen Gruppen sind.

Beispiele für geeignete Farbstoffe a) sind im Einzelnen:
- C.I. Disperse Yellow 1, 2, 3, 4, 5, 6, 7, 8, 9, 10, 11, 11:1, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 179, 180, 181, 182, 183, 184, 184:1, 198, 200, 201, 202, 203, 204, 205, 206, 207, 208, 209, 210, 211, 212, 213, 214, 215, 216, 217, 218, 219, 220, 221, 222, 223, 224, 225, 226, 227 und 228;
- C.I. Disperse Orange 1, 2, 3, 3:3, 4, 5, 6, 7, 8, 9, 10, 11, 12, 13, 14, 15, 16, 17, 18, 19, 20, 21, 22, 23, 24, 25, 25:1, 26, 27, 28, 29, 30, 31, 32, 33, 34, 35, 36, 37, 38, 39, 40, 41, 41:1, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 126, 127, 128, 129, 130, 131, 136, 137, 138, 139, 140, 141, 142, 143, 145, 146, 147 und 148;
- C.I. Disperse Red 1, 2, 3, 4, 5, 5:1, 6, 7, 8, 9, 10, 11, 12, 13, 14, 15, 16, 17, 18, 19, 20, 21, 22, 23, 24, 25, 26, 27, 28, 29, 30, 30:1, 31, 32, 33, 34, 35, 36, 38, 39, 40, 41, 43, 43:1, 46, 48, 50, 51, 52, 53, 54, 55, 55:1, 56, 58, 59, 60, 61, 63, 65, 66, 69, 70, 72, 73, 74, 75, 76, 77, 79, 80, 81, 82, 84, 85, 86, 86:1, 87, 88, 89, 90, 91, 92, 93, 94, 96, 97, 98, 100, 102, 103, 104, 105, 106, 107, 108, 109, 110, 111, 112, 113, 115, 116, 117, 118, 120, 121, 122, 123, 125, 126, 127, 128, 129, 130, 131, 132, 133, 134, 135, 136, 137, 138, 139, 140, 141, 142, 143, 144, 145, 146, 147, 148, 149, 150, 151, 151:1, 152, 153, 154, 155, 156, 157, 158, 159, 160, 161, 162, 163, 164, 165, 166, 167, 167:1, 168, 169, 170, 171, 172, 173, 174, 175, 176, 177, 178, 179, 180, 181, 182, 183, 184, 185, 186, 187, 188, 189, 190, 190:1, 191, 191:1, 192, 193, 194, 195, 211, 223, 224, 273, 274, 275, 276, 277, 278, 279, 280, 281, 302:1, 305, 306, 307, 308, 309, 310, 311, 312, 313, 314, 315, 316, 317, 318, 319, 320, 321, 322, 323, 324, 325, 326, 327, 328, 329, 330, 331, 332, 333, 334, 335, 336, 338, 339, 340, 341, 342, 343, 344, 346, 347, 348, 349, 352, 356 und 367;
- C.I. Disperse Violet 1, 2, 3, 4, 4:1, 5, 6, 7, 8, 9, 10, 11, 12, 13, 14, 15, 16, 17, 18, 19, 20, 21, 22, 23, 24, 25, 26, 27, 28, 29, 31, 33, 34, 35, 36, 37, 38, 39, 40, 41, 42, 43, 44, 45, 46, 47, 48, 49, 50, 51, 52, 53, 54, 55, 56, 57, 58, 59, 60, 70, 81, 86, 87, 88, 89, 91, 92, 93, 94, 96 und 97;
- C.I. Disperse Blue 1, 1:1, 2, 3, 3:1, 4, 5, 6, 7, 7:1, 8, 9, 10, 11, 12, 13, 13:1, 14, 15, 16, 17, 18, 19, 20, 21, 22, 23, 23:1, 24, 25, 26, 27, 28, 29, 30, 31, 32, 33, 34, 35, 36, 38, 39, 40, 42, 43, 44, 45, 47, 48, 49, 51, 52, 53, 54, 55, 56, 58, 60, 60:1, 61, 62, 63, 64, 64:1, 65, 66, 68, 70, 72, 73, 75, 76, 77, 79, 80, 81, 81:1, 82, 83, 84, 85, 86, 87, 88, 89, 90, 91, 92, 93, 94, 95, 96, 97, 98, 99, 100, 101, 102, 103, 104, 105, 106, 107, 108, 109, 111, 112, 113, 114, 115, 116, 117, 118, 119, 121, 122, 123, 124, 125, 126, 127, 128, 130, 131, 132, 133, 134, 136, 137, 138, 139, 140, 141, 142, 143, 144, 145, 146, 147, 148, 149, 150, 151, 152, 153, 154, 155, 156, 158, 159, 160, 161, 162, 163, 164, 165, 165:2, 166, 167, 168, 169, 170, 171, 172, 173, 174, 175, 195, 281, 282, 283, 283:1, 284, 285, 286, 287, 288, 289, 290, 291, 292, 293, 294, 316, 317, 318, 319, 320, 321, 322, 323, 324, 325, 326, 327, 328, 329, 330, 331, 332, 333, 334, 335, 336, 337, 338, 339, 340, 341, 342, 343, 344, 345, 346, 347, 349, 351 und 359;
- C.I. Disperse Green 1, 2, 5, 6 und 9;
- C.I. Disperse Brown 1, 2, 3, 4, 4:1, 5, 7, 8, 9, 10, 11, 18, 19, 20 und 21;
- C.I. Disperse Black 1, 3, 4, 5, 6, 7, 8, 9, 10, 11, 12, 13, 14, 15, 20, 22, 24, 25, 26, 27, 28, 29, 29:1, 30, 31, 32, 33, 34 und 36;
- C.I. Solvent Yellow 2, 3, 7, 12, 13, 14, 16, 18, 19, 21, 25, 25:1, 27, 28, 29, 30, 33, 34, 36, 42, 43, 44, 47, 56, 62, 72, 73, 77, 79, 81, 82, 83, 83:1, 88, 89, 90, 93, 94, 96, 98, 104, 107, 114, 116, 117, 124, 130, 131, 133, 135, 141, 143, 144, 145, 146, 157, 160:1, 161, 162, 163, 167, 169, 172, 173, 176, 179, 180, 181, 182, 183, 184, 185, 186, 187, 189, 190 und 191;
- C.I. Solvent Orange 1, 2, 3, 4, 5, 7, 11, 14, 20, 23, 25, 31A, 40:1, 41, 45, 54, 56, 58, 60, 62, 63, 70, 75, 77, 80, 81, 86, 99, 102, 103, 105, 106, 107, 108, 109, 110, 111, 112 und 113;
- C.I. Solvent Red 1, 2, 3, 4, 8, 16, 17, 18, 19, 23, 24, 25, 26, 27, 30, 33, 35, 41, 42, 45, 48, 49, 52, 68, 69, 72, 73, 83:1, 84:1, 89, 90, 90:1, 91, 92, 106, 109, 111, 118, 119, 122, 124, 125, 127, 130, 132, 135, 141, 143, 145, 146, 149, 150, 151, 155, 160, 161, 164, 164:1, 165, 166, 168, 169, 172, 175, 179, 180, 181, 182, 195, 196, 197, 198, 207, 208, 210, 212, 214, 215, 218, 222, 223, 225, 227, 229, 230, 233, 234, 235, 236, 238, 239, 240, 241, 242, 243, 244, 245, 247 und 248;
- C.I. Solvent Violet 2, 8, 9, 11, 13, 14, 21, 21:1, 26, 31, 36, 37, 38, 45, 46, 47, 48, 49, 50, 51, 55, 56, 57, 58, 59, 60 und 61;
- C.I. Solvent Blue 2, 3, 4, 5, 7, 18, 25, 26, 35, 36, 37, 38, 43, 44, 45, 48, 51, 58, 59, 59:1, 63, 64, 67, 68, 69, 70, 78, 79, 83, 94, 97, 98, 99, 100, 101, 102, 104, 105, 111, 112, 122, 124, 128, 129, 132, 136, 137, 138, 139 und 143;
- C.I. Solvent Green 1, 3, 4, 5, 7, 28, 29, 32, 33, 34 und 35;
- C.I. Solvent Brown 1, 3, 4, 5, 12, 20, 22, 28, 38, 41, 42, 43, 44, 52, 53, 59, 60, 61, 62 und 63;
- C.I. Solvent Black 3, 5, 5:2, 7, 13, 22, 22:1, 26, 27, 28, 29, 34, 35, 43, 45, 46, 48, 49 und 50.

Darüber hinaus eignen sich substituierte Benzodifuranonfarbstoffe, deren Grundkörper der Formel A entspricht.

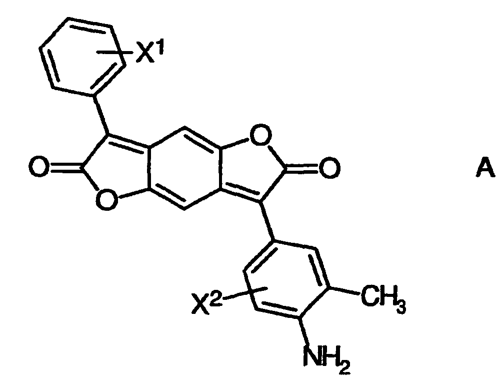

Solche Farbstoffe können an einem oder beiden Phenylringen substituiert sein. Als Substituenten X¹ und X² kommen Halogen, Alkyl, das gegebenenfalls durch nicht benachbarte Sauerstoffatome unterbrochen ist, Alkoxy, dessen Alkylrest durch Sauerstoffatome unterbrochen sein kann und darüber hinaus substituiert sein kann, Hydroxy, gegebenenfalls substituiertes Amino, Cyano, Nitro und Alkoxycarbonyl in Betracht.

Ferner sind Farbstoffe der folgenden Formeln B bis E geeignet:

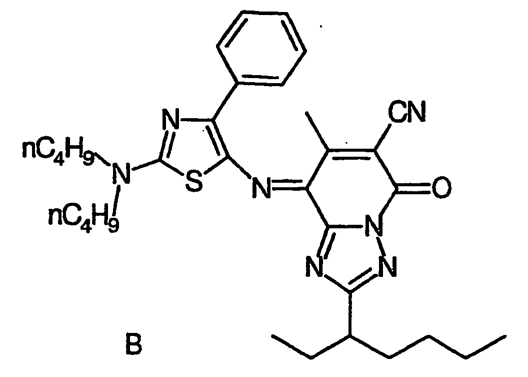

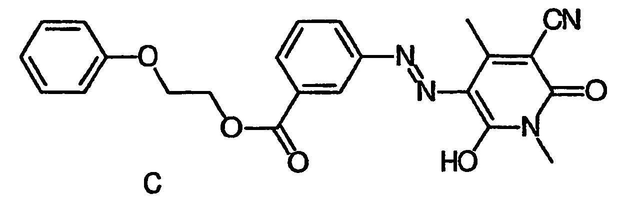

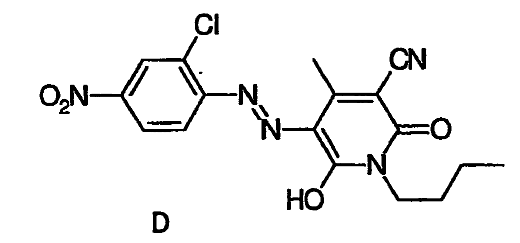

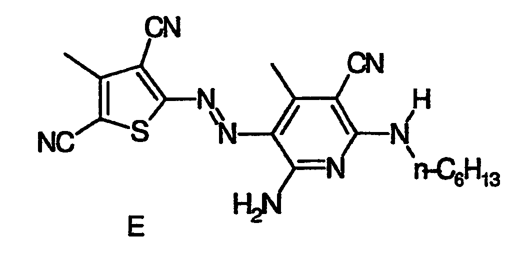

Weitere Beispiele für in Wasser schwerlösliche Farbstoffe a) sind in WO 97/46623, WO 98/24850 und WO 99/29783 aufgeführt.

Die in Wasser schwerlöslichen, dispergierten Farbstoffe a) sollte möglichst feinteilig sein. Bevorzugt haben 95%, besonders bevorzugt 99% der Farbstoffteilchen a) einen mittleren Teilchendurchmesser von 1 µm, vorzugsweise von 0,5 µm.

Die erfindungsgemäßen Farbmittelzubereitungen enthalten in der Regel 0,01 bis 20 Gew.-%, bevorzugt 0,2 bis 10 Gew.-%, besonders bevorzugt 1 bis 6 Gew.-% Farbstoff a).

Wasser stellt den Hauptbestandteil b) der erfindungsgemäßen Farbmittelzubereitungen dar, wobei vollentsalztes Wasser, wie es beispielsweise durch die Verwendung eines Ionenaustauschers erhältlich ist, bevorzugt ist. Sein Gehalt beträgt üblicherweise 50 bis 95 Gew.-%. Für die erfindungsgemäßen Zubereitungen ist dabei ein Wassergehalt von 60 bis 80 Gew.-% bevorzugt.

Die erfindungsgemäßen Farbmittelzubereitungen weisen weiterhin einen Gehalt von in der Regel 0,1 bis 25 Gew.-%, bevorzugt von 0,5 bis 10 Gew.-%, an Dispergiermittel c) auf.

Als Dispergiermittel c) eignen sich im Prinzip alle für wässrige Systeme bekannten Dispergiermittel.

Besonders geeignet sind wasserlösliche Dispergiermittel auf der Basis eines oder mehrerer wasserlöslicher oxalkylierter Phenole c1), eines oder mehrerer Arylsulfonsäure-Formaldehyd-Kondensationsprodukte c2), eines oder mehrerer Kondensationsprodukte eines mindestens difunktionellen Isocyanats mit jeweils eine isocyanatreaktive Gruppen tragenden Verbindungen c3) oder eines oder mehrerer alkoxylierter Hydroxynaphthaline c4).

Als Dispergiermittel c1) sind oxalkylierte Phenole der Formel C 1a 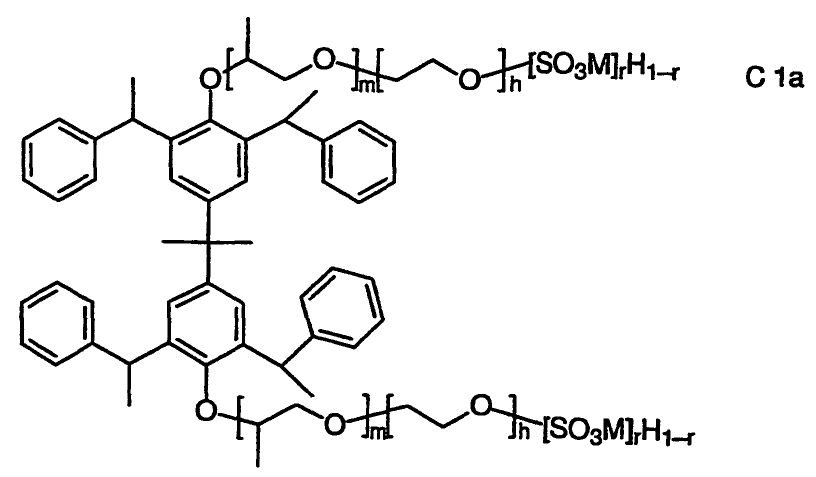 oder C 1b 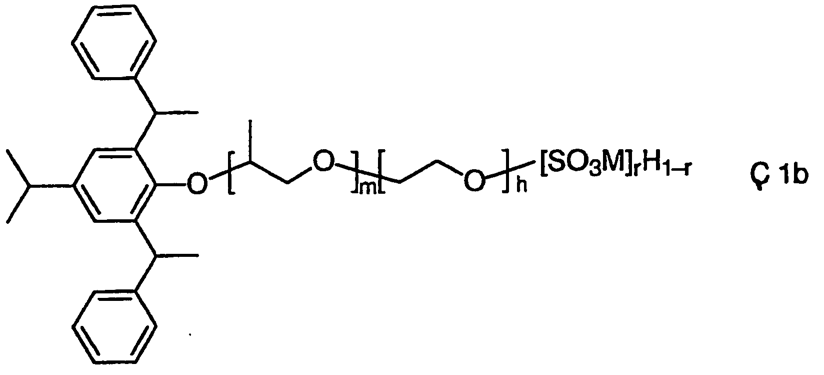 oder deren Mischungen geeignet, in denen die Variablen wie folgt definiert sind:
m liegt zwischen 0 und 180, bevorzugt zwischen 0 und 125
h liegt zwischen 15 und 200, bevorzugt zwischen 37 und 180, wobei
n ≥ m ist;
M ist ein Alkalimetall, bevorzugt Na oder K und besonders bevorzugt Na;
r ist 0 oder 1.

Die Herstellung der Verbindungen C 1a und C 1b erfolgt vorteilhaft durch Umsetzung der Phenole C 1a.1 oder C 1a.2 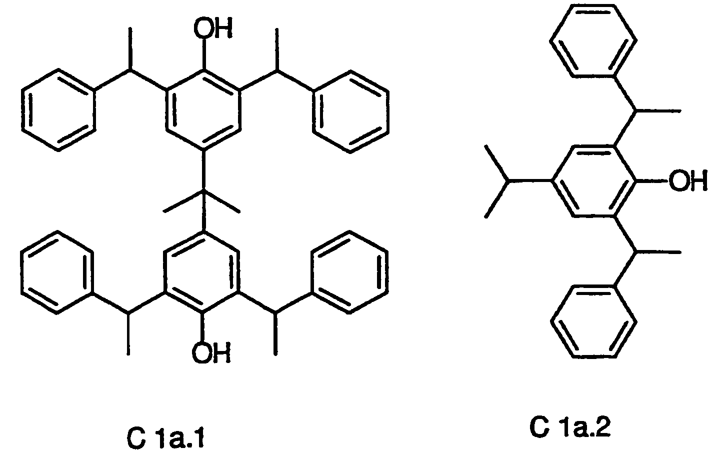 mit Propylenoxid und folgender Umsetzung des Adduktes mit Ethylenoxid oder durch Umsetzen von C 1a.1 oder C 1a.2 mit Ethylenoxid. Anschließend kann man die Addukte mit Chlorsulfonsäure oder Schwefeltrioxid vollständig oder partiell zu Schwefelsäurehalbester umsetzen und die erhaltenen Halbester mit alkalisch wirkenden Mitteln neutralisieren.

Die Phenole der Formel C 1a.1 und C 1a.2 können durch Umsetzen von Bisphenol A (2,2-(p,p'-Bishydroxydiphenyl)propan) oder Phenol mit 4 bzw. 2 mol Styrol in Gegenwart von Säure als Katalysator erhalten werden. Dabei werden die Phenole C 1a.1 und C 1a.2 nach bekannten Verfahren zuerst mit Propylenoxid und anschließend mit Ethylenoxid oder nur mit Ethylenoxid in Gegenwart von sauer oder alkalisch wirkenden Katalysatoren, beispielsweise mit NaOCH₃ oder mit SbCl₅, zu den entsprechenden Oxalkylierungsprodukten C 1a bzw. C 1b mit r = 0 umgesetzt. Die Oxalkylierung kann z.B. nach dem in der US 2,979,528 beschriebenen Verfahren erfolgen.

Die Schwefelsäurehalbester werden durch Reaktion der Oxalkylierungsprodukte mit Chlorsulfonsäure oder Schwefeltrioxid hergestellt, wobei die Menge an Chlorsulfonsäure oder Schwefeltrioxid so gewählt wird, dass alle freien Hydroxylgruppen oder nur ein gewisser Prozentsatz sulfatiert wird. Im letzteren Falle entstehen Gemische aus Verbindungen der Formel C 1a bzw. C 1b, die freie und sulfatierte Hydroxylgruppen enthalten. Zur Verwendung als Dispergiermittel werden die bei der Umsetzung erhaltenen Halbester der Schwefelsäure in wasserlösliche Salze überführt. Als solche kommen vorteilhaft die Alkalimetallsalze, z.B. die Natrium- oder Kaliumsalze, in Betracht. Dabei sind im Falle von Chlorsulfonsäure zwei Äquivalente, bei Schwefeltrioxid ein Äquivalent basisch wirkender Verbindungen erforderlich. Als letztere verwendet man zweckmäBigerweise wässriges Alkalimetallhydroxid. Bei der Neutralisation sollte die Temperatur 70°C nicht überschreiten. Die erhaltenen Salze können in Form von wässrigen Lösungen oder auch als solche isoliert und in fester Form verwendet werden.

Bevorzugt sind Dispergiermittel c1), bei denen m 0 bis im Mittel 2,5, h im Mittel 37 bis 250 und r 0 bis im Mittel 0,5 ist. Besonders bevorzugt sind Dispergiermittel c1), bei denen m 0 bis im Mittel 2,5, h im Mittel 50 bis 100 und r im Mittel 0,5 ist.

Die Dispergiermittel c1) sind bekannt und z.B. in der US 4,218,218 beschrieben.

Die Dispergiermittel c2) sind durch Sulfonieren aromatischer Verbindungen wie Naphthalin selbst oder Naphthalin enthaltender Gemische und anschließendes Kondensieren der gebildeten Arylsulfonsäuren mit Formaldehyd erhältlich.

Als Ausgangsprodukt für die Herstellung der Arylsulfonsäuren wurde bevorzugt das in Tabelle 1 charakterisierte Gemisch aromatischer Verbindungen verwendet, das durch thermische Spaltung eines naphthenischen Rückstandsöls bei einer Temperatur von 1400 bis 1700°C und Fraktionieren der Spaltprodukte (Fraktion bei 1013 mbar, 100-120°C übergehend) erhalten wurde. Diese naphthenischen Rückstandsöle fallen beim Cracken von Leichtbenzin an und werden auch als hochsiedende aromatische Kohlenwasserstofföle bezeichnet.

Diese Aromatenfraktion besteht aus einer Mischung vieler aromatischer Substanzen, deren Struktur und Menge praktisch nicht im einzelnen ermittelt werden kann. Folgende Arylverbindungen sind die wichtigsten Vertreter dieser Aromatenfraktion:

**Tabelle 1**

| | Gew.-% in der Aromatenfraktion |
|---|---|
| Naphthalin | 30 - 55 |
| 2-Methylnaphthalin | 5 - 15 |
| 1-Methylnaphthalin | 4 - 10 |
| Inden | 3 - 10 |
| Diphenyl | 1 - 5 |
| Methylinden | 1 - 5 |
| Acenaphthen | 1 - 4 |

Die Aromatenfraktion enthält außerdem an identifizierten Bestandteilen in Mengen von 0,1 bis etwa 2 Gew.-% folgende aromatische Verbindungen: Fluoren, Indan, α-Methylstyrol, Phenanthren, Methylindan, Dimethylnaphthalin, Ethylnaphthalin, Xylole, Tetralin, Styrol, Methylethylbenzol, Anthracen, Fluoranthren, Pyren und Toluol.

Die Herstellung des Dispergiermittels c2) kann in Gegenwart von aromatischen oder langkettigen aliphatischen Carbonsäuren, deren Salzen, Anhydriden oder Mischungen dieser Verbindungen vorgenommen werden.

Beispiele für geeignete aromatische Carbonsäuren oder deren Derivate sind Naphthalincarbonsäure, Phthalsäure, Terephthalsäure, Isophthalsäure, Benzoesäure, Trimellitsäure, Phenylessigsäure, Phenoxyessigsäure, Salicylsäure, p-Hydroxybenzoesäure, Diphenylessigsäure, m-Hydroxybenzoesäure, Benzoltetracarbonsäure oder Säureanhydride wie Trimellitsäureanhydrid, Benzol-1,2,4,5-tetracarbonsäuredianhydrid oder Phthalsäureanhydrid.

Geeignete langkettige aliphatische Carbonsäuren sind insbesondere gesättigte oder olefinisch ungesättigte, lineare oder verzweigte aliphatische Monocarbonsäuren mit 8 bis 22, vorzugsweise 8 bis 18 Kohlenstoffatomen, natürlichen oder synthetischen Ursprungs, beispielsweise höhere Fettsäuren wie Laurinsäure, Myristinsäure, Palmitinsäure, Stearinsäure, Ölsäure, Linolsäure oder Linolensäure oder synthetisch hergestellte Carbonsäuren wie 2-Ethylhexansäure, Isononansäure oder Isotridecansäure.

Als Salze der genannten Carbonsäuren kommen die Alkali-, Ammonium- oder Erdalkalisalze in Betracht, die beispielsweise durch Neutralisation dieser Carbonsäuren mit Natronlauge, Kalilauge, Lithiumhydroxid, Soda, Magnesiumcarbonat, Calciumoxid, Calciumhydroxid, Ammoniak oder Alkanolaminen wie Ethanolamin, Diethanolamin oder Triethanolamin erhältlich sind.

Bevorzugt sind Natriumbenzoat, Natriumphenylacetat, Natriumsalicylat, Natrium-4-hydroxybenzoat, Natriumterephthalat, Natrium-2-hydroxy-3-naphthalincarboxylat, Naphthalin-1-carbonsäure, Phthalsäureanhydrid oder Benzoesäure.

Als Dispergiermittel c2) eignen sich in diesem Fall vor allem solche Gemische, die 50 bis 97 Gew.-%, insbesondere 70 bis 95 Gew.-%, Arylsulfonsäure-Formaldehyd-Kondensationsprodukte und 3 bis 50 Gew.-%, insbesondere 5 bis 30 Gew.-%, aromatische oder langkettige aliphatische Carbonsäuren, deren Salze oder Anhydride oder Mischungen davon enthalten.

Diese Gemische werden im ersten durch Umsetzung mit konzentrierter Schwefelsäure oder mit Oleum mit einem SO₃-Gehalt von 10 bis 65 Gew.-% Schritt sulfoniert, und zwar bei Temperaturen von 120-160°C, bevorzugt bei 135-145°C. Pro Gewichtsteil der Aromaten werden vorteilhaft 0,7 bis 1,5 Gewichtsteile Oleum mit 65 Gew.-% SO₃ eingesetzt oder eine entsprechende Menge Oleum mit geringerem SO₃-Gehalt. Die Reaktionsdauer beträgt bei 145°C üblicherweise von 1,5 bis 3 Stunden, bei 140°C von 2¼ bis 4 Stunden und bei 135°C von 3¼ bis 6 Stunden.

Nach der Sulfonierung enthalten die Arylsulfonsäuregemische mindestens 30 Gew.-% eines Gemisches von α- und β-Naphthalinsulfonsäuren, wobei das Verhältnis der α- zu den β-Isomeren üblicherweise 20:1 bis 1:8, insbesondere 10:1 bis 1:5 beträgt und ganz besonders bevorzugt 1:1 bis 1:2 beträgt.

Anschließend werden die sulfonierten Produkte mit Formaldehyd kondensiert. Dies erfolgt im Allgemeinen dadurch, dass man die Reaktionsmischung der Sulfonierungsreaktion mit Wasser verdünnt und anschließend Formaldehyd zufügt, vorzugsweise in Form der 10 bis 50 Gew.-% wässrigen Lösung. Die so entstanden Mischung hält man über einen Zeitraum von 4 bis 12, bevorzugt 7 bis 9 Stunden bei einer Temperatur von 90 bis 105°C. Wenn man bei erhöhtem Druck arbeitet, beispielsweise von 1,1 bis 10 bar, so kann man auch bei Reaktionstemperaturen von 105 bis 150°C arbeiten. Üblicherweise setzt man 0,05 bis 0,2, bevorzugt 0,07 bis 0,17 Gewichtsteile Formaldehyd ein, bezogen auf Sulfonierungsprodukte.

Nach Beendigung der Reaktion wird die Reaktionsmischung üblicherweise neutralisiert, beispielsweise mit Natriumhydroxid, Kaliumhydroxid, Calziumhydroxid, Natriumcarbonat Kaliumcarbonat oder Natriumbicarbonat, in Form der wässrigen Lösungen, bis der pH-Wert zwischen 6 und 11 liegt.

Die Kondensationsprodukte weisen bei Verwendung der o.g. Aromatenfraktion einen Sulfonsäuregruppengehalt von maximal 40 Gew.-% auf. Aufgrund des Herstellungsprozesses können in den Kondensationsprodukten noch bis zu 10 Gew.-% Na₂SO₄ und bis zu 25 mol-% Schwefelsäure, bezogen auf Sulfonsäuregruppen, enthalten sein.

Die Dispergiermittel c2) und ihre Herstellung sind bekannt und z.B. in der US 5,186,846, der DE-A-11 37 005 oder der EP-A 0 380 778 beschrieben.

Die Dispergiermittel c3) sind Kondensationsprodukte von mindestens difunktionellen Isocyanaten, die als Verknüpfungsstelle dienen, mit einer polymeren Verbindung, die an einem Kettenende mit einer isocyanatreaktiven Gruppe terminiert ist und die zu dispergierenden Feststoffteilchen mit dem Dispersionsmedium verträglich macht (im folgenden "Stabilisatorblock" genannt), und einem (Homo- oder Co-)Polymer eines stickstoffhaltigen Monomers oder einem Phosphonsäureester, die jeweils über eine isocycanatreaktive Gruppe verfügen und sich an die zu dispergierenden Feststoffteilchen anlagern (im folgenden "Ankergruppenblock" genannt).

Das die Verknüpfung von Stabilisatorblock und Ankergruppenblock bewirkende Isocyanat ist ein Diisocyanat oder ein hoher funktionelles Polyisocyanat mit einer mittleren NCO-Funktionalität von 2,0 bis 4,5.

Die Diisocyanate können aromatisch oder aliphatisch sein, bevorzugt sind aliphatische Diisocyanate wie Tetramethylendiisocyanat, Hexamethylendiisocyanat, Octamethylendiisocyanat, Decamethylendiisocyanat, Dodecamethylendiisocyanat, Tetradecamethylendiisocyanat, Trimethylhexandiisocyanat, Tetramethylhexandiisocyanat, 1,4-, 1,3- oder 1,2-Diisocyanatocyclohexan, 4,4'-Di(isocyanatocyclohexyl)methan, 1-Isocyanato-3,3,5-trimethyl-5-(isocyanatomethyl)cyclohexan(isophorondiisocyanat) und 2,4- und 2,6-Diisocyanato-1-methylcyclohexan, wobei Hexamethylendiisocyanat und Isophorondiisocyanat besonders bevorzugt sind.

Die höher funktionellen Polyisocyanate können ebenfalls aromatisch oder aliphatisch sein. Auch hier sind die aliphatischen Polyisocyanate bevorzugt, vor allem solche mit einer mittleren NCO-Funktionalität von 1,7 bis 5, insbesondere etwa 3. Beispielhaft seien folgende Gruppen genannt:
(a) Isocyanuratgruppen aufweisende Polyisocyanate von aliphatischen und/oder cycloaliphatischen Diisocyanaten. Besonders bevorzugt sind hierbei die entsprechenden Isocyanato-Isocyanurate auf Basis von Hexamethylendiisocyanat und Isophorondiisocyanat. Bei diesen Isocyanuraten handelt es sich insbesondere um einfache Tris-isocyanatoalkyl- bzw. Triisocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-%, und eine mittlere NCO-Funktionalität von 2,6 bis 4,5.
(b) Uretdiondiisocyanate mit aliphatisch und/oder cycloaliphatisch gebundenen Isocyanatgruppen, die sich vorzugsweise von Hexamethylendiisocyanat oder Isophorondiisocyanat ableiten. Bei Uretdiondüsocyanaten handelt es sich um cyclische Dimerrisierungsprodukte von Diisocyanaten.
(c) Biuretgruppen aufweisende Polyisocyanate mit aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate haben im allgemeinen einen NCO-Gehalt von 18 bis 25 Gew.-% und eine mittlere NCO-Funktionalität von 3 bis 4,5.
(d) Urethan- und/oder Allophanatgruppen aufweisende Polyisocyanate mit aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit einfachen mehrwertigen Alkoholen, wie Trimethylolpropan, Glycerin, 1,2-Dihydroxypropan oder deren Gemischen erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 3.
(e) Oxadiazintriongruppen enthaltende Polyisocyanate, vorzugsweise von Hexamethylendiisocyanat oder Isophorondiisocyanat abgeleitet. Solche Oxadiazintriongruppen enthaltende Polyisocyanate sind aus Diisocyanat und Kohlendioxid herstellbar.
(f) Uretonimin-modifizierte Polyisocyanate.

Bei der den Stabilisatorblock bildenden polymeren Verbindung handelt es sich vorzugsweise um eine polymere Verbindung der allgemeinen Formel C 3a

R⁵⁻Yₓ-XH C 3a

worin
- R⁵: für Wasserstoff,
C₁-C₂₈-Alkyl, bevorzugt C₁-C₁₀-Alkyl, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl und n-Decyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl.
- C₂-C₂₈-Alkenyl mit einer oder mehreren Doppelbindungen, substituiert oder unsubstituiert, beispielsweise Vinyl, 1-Allyl, 3-Allyl, ω-Butenyl, ω-Pentenyl, ω-Hexenyl, ω-Decenyl, ω-Undecenyl, ω-Eicosenyl, 1-cis-Buta-1,3-dienyl oder 1-cis -Hexa-1,5-dienyl. Unter den substituierten C₂-C₂₈-Alkenyl- gruppen seien beispielhaft genannt: Isopropenyl, 1-Isoprenyl, α-Styryl, β-Styryl, 1-cis-1,2-Phenylethenyl oder 1-trans-1,2-Phenylethenyl.
C₂-C₂₈-Alkinyl mit einer oder mehreren Dreifachbindungen, substituiert oder unsubstituiert und optional mit Doppelbindungen, beispielsweise Ethinyl, Propargyl, ω-Butinyl, But-2-inyl, ω-Pentinyl, Pent-2-inyl, Pent-3-inyl, 2-Methylpent-3-inyl, ω-Hexinyl, ω-Decinyl, ω-Undecinyl, ω-Eicosinyl. oder den Rest eines Polymerisationsinitiators oder eines Kettenreglers steht,
- Y: für gleiche oder verschiedene einpolymerisierte Einheiten von Monomeren, ausgewählt unter α,β-ethylenisch ungesättigten Mono- oder Dicarbonsäuren, gegebenenfalls mit Hydroxy, C₁-C₆-Alkoxy, Polyalkylenoxy oder Halogen ein- oder mehrfach substituierten C₁-C₂₀-(Cyclo)alkyl- oder C₇-C₂₀-Aralkylestern, Amiden, Nitrilen oder Anhydriden von α,β-ethylenisch ungesättigten Mono- oder Dicarbonsäuren, Vinyl- oder Allylestern aliphatischer oder aromatischer Carbonsäuren, Vinyl- oder Allylethern, ethylenisch ungesättigten Sulfonsäuren oder Sulfonsäurederivaten, gegebenenfalls halogenierten ethylenisch ungesättigten aliphatischen C₂-C₂₀-Kohlenwasserstoffen, aromatischen ethylenisch ungesättigten Verbindungen oder zu Polyphosphacenen polymerisierbaren Verbindungen, oder für 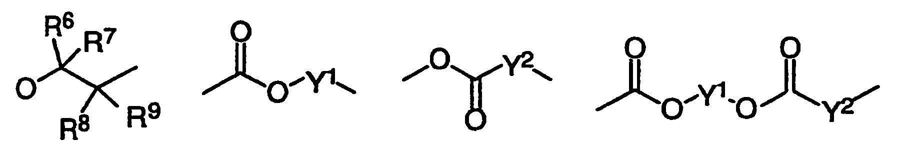
steht, wobei
- R⁶ bis R⁹: unabhängig voneinander für
Wasserstoff,
C₁-C₆-Alkyl, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl.
C₆-C₂₀-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.
-CH₂-Cl oder -CH₂-OH stehen,
und Y¹, Y² unabhängig voneinander für eine C₂-C₂₀-Alkylen-,
C₆-C₁₄-Arylen wie beispielsweise p-Phenylen oder m-Phenylen oder Aralkylengruppe stehen,
- x: für eine ganze Zahl zwischen 0 und 10000 steht, wobei x vorzugsweise 3 2, insbesondere 3 3 und besonders bevorzugt 30 bis 1000 ist, und
- X: für COO, O, S oder NR¹⁰ steht, worin R¹⁰ für H oder eine C₁-C₆-Alkylgruppe steht, die wie oben stehend definiert ist.

Bevorzugt werden zum Aufbau der polymeren Verbindung C 3a C₁-C₈-Alkyl(meth)acrylate eingesetzt. Besonders bevorzugt werden ein oder mehrere C₁-C₄-Alkylmethacrylate, insbesondere Methylmethacrylat und/oder Butylmethacrylat, polymerisiert. Bei der isocyanatreaktiven Gruppe XH handelt es sich vorzugsweise um eine Hydroxylgruppe, die mit Hilfe von Initiatoren, die beim Zerfall ein Hydroxyradikal liefern, und/oder mit Hilfe von Kettenreglern, die eine Hydroxylgruppe enthalten, terminal in das Polyacrylat eingeführt werden kann.

Ganz besonders bevorzugt als polymere Verbindung C 3a sind Mono-(in der Regel C₁-C₁₈-, bevorzugt C₁-C₄-)alkylether von Poly- (insbesondere C₂-C₄-)alkylenglykolen, die z.B. durch Umsetzung eines Alkanols mit Alkenoxiden, wie Ethylenoxid, Propylenoxid und Butylenoxid, oder Epichlorhydrin erhalten werden können. Besonders geeignet sind mit 5 bis 10000, vorzugsweise 5 bis 80 mol Ethylenoxid und/oder Propylenoxid alkoxylierte C₁-C₁₈- (insbesondere C₁-C₄-)Alkanole, wobei Polyethylenglykolmonomethylether ganz besonders geeignet sind.

Das gewichtsmittlere Molekulargewicht des Stabilisatorblocks beträgt vorzugsweise etwa 250 bis 100000, insbesondere etwa 500 bis 7000.

Eine zum Aufbau des Dispergiermittels c3) geeignete Ausführungsform des Ankergruppenblocks basiert auf Homo- oder Copolymerisaten eines oder mehrerer Monomerer aus der Gruppe der N-Vinylamide, N-Vinyllactame und vinyl- oder allylsubstituierten stickstoffhaltigen Heterocyclen. Beispiele für besonders geeignete Monomere sind N-Vinylpyrrolidon, N-Vinylpyridin, N-Vinylcaprolactam, N-Vinylimidazol und N-Vinylformamid, wobei N-Vinylpyrrolidon bevorzugt ist. Vorzugsweise weist das Homo- oder Copolymer einen K-Wert von 10 bis 100, insbesondere 10 bis 30, auf. Die Terminierung durch eine Hydroxylgruppe als isocyanatreaktive Gruppe kann durch Durchführung der Polymerisation in Wasser oder einem niederen Alkohol wie Isopropanol oder durch Polymerisation in Gegenwart eines entsprechenden Kettenreglers und/oder Initiators erreicht werden.

Eine weitere zum Aufbau des Dispergiermittels c3) geeignete Ausführungsform des Ankergruppenblocks bilden Phosphonsäureester der allgemeinen Formel C 3b 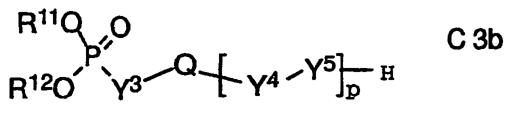 in denen
- R¹¹ und R¹²: unabhängig voneinander für C₁-C₄-Alkyl wie Methyl, Ethyl, n-Propyl, iso-Propyl, n-Butyl, iso-Butyl, sec.-Butyl und tert.-Butyl stehen, insbesondere R¹¹ = R¹² für Methyl oder Ethyl stehen;
- Q: für NR₍₂₋ₚ₎ oder CR₍₃₋ₚ₎ steht (R = H oder C₁-C₈-Alkyl) ;
- Y³ und Y⁴: unabhängig voneinander für eine chemische Bindung oder für optional mit C₁-C₈-Alkyl oder Aryl substituiertes C₁-C₁₀-Alkylen stehen, das durch ein oder mehrere O, NR, CO, COO, OCO, CONR oder NRCO unterbrochen sein kann;
- p: für 1 oder 2 steht; und
- Y⁵: für COO, O, S oder NR¹³ steht, wobei R¹³ für H oder eine C₁-C₆-Alkylgruppe steht, die wie oben stehend definiert ist.

Bevorzugte Beispiele für diese Phosphonsäureester sind N,N-Bis(hydroxyethyl)aminomethylphosphonsäurediethylester, Dimethyl- und Diethylester von 3-Hydroxymethylamino-3-oxopropylphosphonsäure, 3-Aminopropylphosphonsäure, 1-Aminopropylphosphonsäure, 2-Aminooctylphosphonsäure, 1-Aminooctylphosphonsäure, 1-Aminobutylphosphonsäure, Hydroxymethylphosphonsäure und 1-Hydroxyethylphosphonsäure.

Die Umsetzung des Di- oder Polyisocyanats mit dem Stabilisatorblock und dem Ankergruppenblock kann zweistufig oder in einer Eintopfreaktion erfolgen. Vorzugsweise erfolgt die Umsetzung jedoch zweistufig, wobei in einer ersten Stufe das Di- oder Polyisocyanat mit dem Stabilisatorblock umgesetzt wird. Die Umsetzung kann in Substanz oder in einem Lösungsmittel erfolgen, wobei die Umsetzung in einem Lösungsmittel, wie Aceton, THF, Toluol, Dioxan, bevorzugt ist. Wenn der Stabilisatorblock durch Polymerisation einer ethylenisch ungesättigten Verbindung hergestellt worden ist, kann die Umsetzung des Stabilisatorblocks mit dem Di- oder Polyisocyanat vorteilhaft im gleichen Lösungsmittel wie die radikalische Polymerisation durchgeführt werden. Die Reaktion kann ohne Katalysator oder bevorzugt in Anwesenheit eines Katalysators, wie eines tertiären Amins, insbesondere Triethylamin, oder eines Metallsalzes, insbesondere Zinnoctoat oder Bleioctoat, oder einer metallorganischen Verbindung, wie Dibutylzinndilaurat oder Titantetramethylat, durchgeführt werden. Die Umsetzung wird im allgemeinen bei einer Temperatur von Raumtemperatur bis 125°C, insbesondere 40 bis 90°C, durchgeführt.

Weitere Einzelheiten zu den Dispergiermitteln c3) sind in der DE-A-198 429 52 beschrieben.

Bei den Dispergiermitteln c4) handelt es sich um alkoxylierte Hydroxynaphthaline, wobei ethoxylierte β-Hydroxynaphthaline bevorzugt sind. Die Dispergiermittel c4) weisen in der Regel ein mittleres Molekulargewicht M_{w} von 2000 bis 40000 g/mol, insbesondere 20000 bis 35000 g/mol, vor allem 25000 bis 30000 g/mol auf.

Die Dispergiermittel c4) sind allgemein bekannt und auf übliche Weise durch Alkoxylierung von Hydroxynaphthalin zugänglich.

Weiterhin enthalten die erfindungsgemäßen Farbmittelzubereitungen Verbindungen der allgemeinen Formel I.

In Formel I sind die Variablen wie folgt definiert:
- R¹, R²: unabhängig voneinander ausgewählt aus
Wasserstoff,
(CH₂-CH₂-O)ₙH oder (CH(CH₃)-CH₂-O)ₙ-H, wobei n eine ganze Zahl von 1 bis 8, bevorzugt von 1 bis 4 ist;
(CH₂-CH₂-O)ₐ-(CH(CH₃)-CH₂-O)_{b}-(CH₂-CH₂-O)_{c}-(CH(CH₃)-CH₂-O)_{d}-H, wobei a, b, c, d ganze Zahlen von 0 bis 7 sind und a + b + c + d ≤ 9.
- R³: ausgewählt aus
- geradkettiges C₂-C₆-Alkyl wie Ethyl, n-Propyl, n-Butyl, n-Pentyl, n-Hexyl; besonders bevorzugt C₂-C₄-Alkyl wie Ethyl n-Propyl oder n-Butyl;
   In einer bevorzugten Ausführungsform ist R¹ oder R² oder auch R¹ und R² ausgewählt aus (CH₂-CH₂-O)ₙ-H oder (C(CH₃)-CH₂-O)ₙ-H oder (CH₂-CH₂-O)ₐ-(C(CH₃)-CH₂-O)_{b}-(CH₂-CH₂-O)_{c}-(C(CH₃)-CH₂-O)_{d}-H und R³ ausgewählt aus geradkettigem C₂-C₆-Alkyl, C₆-C₁₄-Aryl oder CH₂-O-R⁴. In einer anderen bevorzugten Ausführungsform sind R¹ und R² jeweils gleich Wasserstoff und R³ ausgewählt aus C₂-C₃-Alkyl, C₆-C₁₄-Aryl oder CH₂-O-R⁴.
- C₆-C₁₄ Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl. Dabei können die C₆-C₁₄-Arylgruppen auch gleich oder verschieden ein oder mehrfach substituiert sein mit C₁-C₈-Alkyl, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl,
- CH₂-O-R⁴ mit
- R⁴: ausgewählt aus C₁-C₁₀-Alkyl, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl und n-Decyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl.

Bevorzugt sind R¹ und R² gleich Wasserstoff.

Die in den erfindungsgemäßen Farbmittelzubereitungen enthaltenen Verbindungen der allgemeinen Formel I sind chiral und können in der Form ihrer d- oder l-Enantiomeren sowie als Mischungen eingesetzt werden. Aus wirtschaftlichen Gründen ist es sinnvoll, sie als Racemate einzusetzen.

Die Herstellung der erfindungsgemäß eingesetzten 1,2-Diole der allgemeinen Formel I kann beispielsweise durch Umsetzung der entsprechenden α-Olefine mit OsO₄ oder anderen Oxidationsmitteln und anschließende Oxidation erfolgen. Eine bevorzugte Methode zur Herstellung der 1,2-Diole erfolgt durch ein 2-Stufenverfahren. Im ersten Schritt epoxidiert man die entsprechenden α-Olefine, beispielsweise mit m-Chlorperbenzoesäure oder Wasserstoffperoxid. Im zweiten Schritt hydrolysiert man die im ersten Schritt gebildeten Epoxide unter sauren oder basischen Bedingungen.

Ein weiterer Aspekt der vorliegenden Erfindung sind Ethylenglykolether oder Propylenglykolether oder gemischte Ethylenglykol-Propylenglykolether der Formel I, in denen die Reste wie folgt definiert sind:
- R¹, R²: unabhängig voneinander ausgewählt aus (CH₂-CH₂-O)ₙH oder (CH(CH₃)-CH₂-O)ₙ-H, wobei n eine ganze Zahl von 1 bis 8, bevorzugt von 1 bis 4 ist;
(CH₂-CH₂-O)ₐ-(CH(CH₃)-CH₂-O)_{b}-(CH₂-CH₂-O)_{c}-(CH(CH₃)-CH₂-O)_{d} -H, wobei a, b, c, d ganze Zahlen von 0 bis 7 sind und a + b + c + d = 9.
- R³: ausgewählt aus
- geradkettiges C₂-C₄-Alkyl wie Ethyl, n-Propyl oder n-Butyl.

Die Herstellung der erfindungsgemäßen Ethylenglykolether oder Propylenglykolether der allgemeinen Formel I erfolgt durch Umsetzung der zugrunde liegenden epoxidierten α-Olefine mit Ethylenglykol- oder Propylenglykolderivaten oder Mischungen derselben unter saurer oder basischer Katalyse, wobei basische Katalyse bevorzugt ist. Wünscht man die sekundäre Hydroxylgruppe selektiv zu verethern, so kann der Einsatz von Schutzgruppenchemie zu besonders reinen Produkten führen. Die ganz besonders bevorzugten veretherten 1,2-Diole d1 - d3 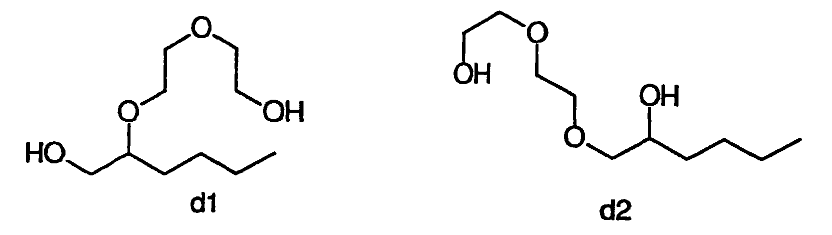 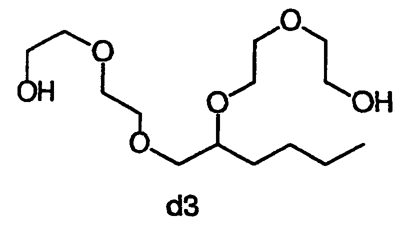 werden vorteilhaft wie folgt hergestellt:
- d1:: Zunächst benzyliert man 1,2-Hexandiol, kommerziell erhältlich bei Acros Chemicals, mit einem Äquivalent Benzylchlorid unter Standardbedingungen. Anschließend deprotoniert man mit Hilfe einer Base, beispielsweise Natriummethanolat NaOCH₃, und setzt mit 2 Äquivalenten Ethylenoxid bei erhöhter Temperatur, vorteilhaft bei 100-150°C, in einem Autoklaven um. Als Lösemittel kann man beispielsweise Methanol verwenden. Im dritten Schritt spaltet man durch Hydrierung unter Standardbedingungen, beispielsweise mit Aktivkohle als Katalysator, die Schutzgruppe wieder ab und erhält nach Filtration, beispielsweise über Kieselgel oder Aluminiumoxid, und Abdampfen des Lösemittels die gewünschte Substanz, deren Struktur sich durch die gängigen spektroskopischen Methoden wie NMR-, IR-Spektroskopie und Massenspektrometrie ermitteln lässt.
- d2:: Man setzt Natrium mit einem Überschuss an Methanol zu Natriummethanolat um. Anschließend gibt man äquimolare Mengen Diethylenglykol und 1,2-Epoxyhexan zu und erhitzt, vorteilhaft in einem Autoklaven, mehrere Stunden auf 100-150°C. Man destilliert das überschüssige Methanol ab und wäscht den Rückstand mit Wasser. Nach Trocknen erhält man die gewünschte Substanz, deren Struktur sich durch die gängigen spektroskopischen Methoden wie NMR-, IR-Spektroskopie und Massenspektrometrie ermitteln lässt.
Alternativ lässt sich d2 auch durch Umsetzen äquimolarer Mengen von 1,2-Epoxyhexan und Diethylenglykol unter Einsatz katalytischer Mengen an Lewis-Säure, beispielsweise Borfluoridacetat oder SbCl₅ nach einer Vorschrift aus DE 27 54 576, Seite 9 erhalten.
- d3:: d3 lässt sich beispielsweise durch Umsetzung von d1 mit 2 Äquivalenten Ethylenoxid erhalten, indem man mit Hilfe einer Base, beispielsweise NaOCH₃, deprotoniert und mit 2 Äquivalenten Ethylenoxid bei erhöhter Temperatur in einem Autoklaven umsetzt, vorteilhaft bei 100-150°C. Als Lösemittel kann man beispielsweise Methanol verwenden. Nach Filtration, beispielsweise über Kieselgel oder Aluminiumoxid, und Abdampfen des Lösemittels erhält man die gewünschte Substanz, deren Struktur sich durch die gängigen spektroskopischen Methoden wie NMR-, IR-Spektroskopie und Massenspektrometrie ermitteln lässt.

Die oben beschriebenen erfindungsgemäßen Verbindungen lassen sich analog zu 1,2-Diolen als Bestandteil der erfindungsgemäßen Farbmittelzubereitungen einsetzen. Durch den Zusatz der erfindungsgemäßen Verbindungen erhält man Farbmittelzubereitungen mit ganz besonders gutem Stand.

Als weitere Komponente können die erfindungsgemäßen Farbmittelzubereitungen ein oder mehrere organische Lösungsmittel enthalten. Bevorzugte organische Lösemittel sind Polyalkylenether wie beispielsweise Polyethylenglykol, Polypropylenglykol, gemischte Polyether von Polyethylenglykol und Polypropylenglykol sowie niedermolekulares Poly-THF. Niedermolekulares Polytetrahydrofuran kann allein oder vorzugsweise im Gemisch mit einem oder mehreren schwer verdampfbaren, in Wasser löslichen oder mit Wasser mischbaren organischen Lösungsmitteln eingesetzt werden. Dabei wird überraschend gefunden, dass durch die Zugabe von Polytetrahydrofuran die Lauffähigkeit der erfindungsgemäßen Tinten weiter verstärkt wird.

Das bevorzugt verwendete Polytetrahydrofuran hat üblicherweise ein mittleres Molekulargewicht M_{w} von 150 bis 500 g/mol, bevorzugt von 200 bis 300 g/mol und besonders bevorzugt von etwa 250 g/mol (entsprechend einer Molekulargewichtsverteilung von 225 bis 275 g/mol; Poly-THF 250, BASF Aktiengesellschaft).

Polytetrahydrofuran kann auf bekannte Weise über kationische Polymerisation von Tetrahydrofuran hergestellt werden.

Wenn man Polytetrahydrofuran im Gemisch mit weiteren organischen Lösungsmitteln einsetzt, werden hierfür erfindungsgemäß schwer verdampfbare (d.h. in der Regel einen Siedepunkt > 100°C aufweisende) und damit eine wasserrückhaltende Wirkung besitzende organische Lösungsmittel eingesetzt, die in Wasser löslich oder mit Wasser mischbar sind.

Als Lösungsmittel eignen sich mehrwertige Alkohole, bevorzugt unverzweigte und verzweigte mehrwertige Alkohole mit 2 bis 8, insbesondere 3 bis 6, Kohlenstoffatomen, wie Ethylenglykol, 1,2- und 1,3-Propylenglykol, Glycerin, Erythrit, Pentaerythrit, Pentite wie Arabit, Adonit und Xylit und Hexite wie Sorbit, Mannit und Dulcit.

Weiterhin als Lösungsmittel geeignet sind Pyrrolidon und N-Alkylpyrrolidone, deren Alkylkette vorzugsweise 1 bis 4, vor allem 1 bis 2 Kohlenstoffatome enthält. Beispiele für geeignete Alkylpyrrolidone sind N-Methylpyrrolidon, N-Ethylpyrrolidon und N-(2-Hydroxyethyl)pyrrolidon.

Beispiele für besonders bevorzugte Lösungsmittel Pyrrolidon, N-Methylpyrrolidon und N-(2-Hydroxyethyl)pyrrolidon.

Polytetrahydrofuran kann auch mit einem oder mehreren (z.B. zwei, drei oder vier) Lösungsmitteln gemischt werden.

Die erfindungsgemäßen Farbmittelzubereitungen enthalten in der Regel 0,1 bis 40 Gew.-%, bevorzugt 5 bis 30 Gew.-%, besonders bevorzugt 10 bis 25 Gew.-%, und ganz besonders bevorzugt 10 bis 20 Gew.-%, Lösungsmittelkamponente.

Die Lösungsmittelkomponente kann vorteilhaft durch Harnstoff (in der Regel 0,5 bis 3 Gew.-%, bezogen auf das Gewicht der Farbmittelzubereitung) ergänzt werden, der die wasserrückhaltende Wirkung des Lösungsmittelgemisches noch verstärkt.

Die erfindungsgemäßen Farbmittelzubereitungen können weitere Hilfsmittel, wie sie insbesondere für wässrige Ink-Jet-Tinten und in der Druck- und Lackindustrie üblich sind, enthalten. Genannt seien z.B. Konservierungsmittel (wie 1,2-Benzisothiazolin-3-on und dessen Alkalimetallsalze, Glutardialdehyd und/oder Tetramethylolacetylendiharnstoff), Antioxidantien, Entgaser/Entschäumer (wie Acetylendiole und ethoxylierte Acetylendiole, die üblicherweise 20 bis 40 mol Ethylenoxid pro mol Acetylendiol enthalten und gleichzeitig auch dispergierend wirken), Mittel zur Regulierung der Viskosität, Verlaufshilfsmittel, Benetzer (z.B. benetzend wirkende Tenside auf der Basis von ethoxylierten oder propoxylierten Fett- oder Oxoalkoholen, Propylenoxid/Ethylenoxid-Blockcopolymeren, Ethoxylaten von Ölsäure oder Alkylphenolen, Alkylphenolethersulfaten, Alkylpolyglycosiden, Alkylphosphonaten, Alkylphenylphosphonaten, Alkylphosphaten, Alkylphenylphosphaten oder bevorzugt Polyethersiloxan-Copolymeren, insbesondere alkoxylierten 2-(3-Hydroxypropyl)heptamethyltrisiloxanen, die in der Regel einen Block aus 7 bis 20, vorzugsweise 7 bis 12, Ethylenoxideinheiten und einen Block aus 2 bis 20, vorzugsweise 2 bis 10 Propylenoxideinheiten aufweisen und in Mengen von 0,05 bis 1 Gew.-% in den Farbmittelzubereitungen enthalten sein können), Antiabsetzmittel, Glanzverbesserer, Gleitmittel, Haftverbesserer, Hautverhinderungsmittel, Mattierungsmittel, Emulgatoren, Stabilisatoren, Hydrophobiermittel, Lichtschutzadditive, Griffverbesserer, Antistatikmittel und Basen wie Triethanolamin zur Regulierung des pH-Wertes. Wenn diese Mittel Bestandteil der erfindungsgemäßen Pigmentzubereitungen sind, beträgt ihre Gesamtmenge in der Regel 2 Gew.-%, insbesondere 1 Gew.-%, bezogen auf das Gewicht der Farbmittelzubereitung.

Erfindungsgemäße bindemittelfreie Farbmittelzubereitungen weisen üblicherweise eine dynamische Viskosität von 1 bis 7 mm²/sec, vorzugsweise1 bis 5 mm²/sec, insbesondere von 1 bis 3 mm²/sec, auf.

Die Oberflächenspannung der erfindungsgemäßen Farbmittelzubereitungen beträgt in der Regel 24 bis 70 mN/m, insbesondere 30 bis 60 mN/m.

Der pH-Wert der erfindungsgemäßen Farbmittelzubereitungen liegt im allgemeinen bei 5 bis 10, vorzugsweise bei 7 bis 9.

Bei der Herstellung der erfindungsgemäßen Farbmittelzubereitungen geht man zweckmäßigerweise wie folgt vor.

In einem ersten Schritt stellt man ein Dispergiermittel c1) - c4) bereit. Gut geeignete Dispergiermittel sind beispielsweise in die WO 01/12728 sowie in US 5,186,846 beschriebenen Naphthalinsulfonsäure-Formaldehyd-Kondensationsprodukte sowie das Arylsulfonsäure-Formaldehyd-Kondensationsprodukt C2-A.

Die Verwendung von Verbindungen der allgemeinen Formel I zusammen mit Arylsulfonsäure-Formaldehyd-Kondensationsprodukten c2), insbesondere mit C2-A bei der Herstellung von Farbmittelzubereitungen für das Ink-Jet-Verfahren führt zu besonders haltbaren Tinten, die ein ganz besonders gutes Anschreibverhalten zeigen. Zur Herstellung von ganz besonders bevorzugten erfindungsgemäßen Farbmittelzubereitungen verwendet man vorzugsweise 10 - 200 Gew.-% Naphthalinsulfonsäure-Formaldehyd-Kondensationsprodukte, bezogen auf Farbstoff; vorzugsweise 50 bis 150 Gew.-%. Man mischt das in Wasser schwer lösliche Farbmittel a), beispielsweise in Form eines wasserhaltigen Presskuchens, zusammen mit dem oben beschriebenen Dispergiermittel und dem Dispergiermittel c) in Gegenwart von Wasser und dispergiert in einer geeigneten Apparatur vor, beispielsweise in einem Dissolver. Die resultierende Mischung mahlt man anschließend in einer Mühle, um die gewünschte Teilchengrößenverteilung (in der Regel 1 µm, bevorzugt 0,5 µm) zu erreichen. Nach Einstellung der gewünschten Farbmittelkonzentration durch Zugabe von d), Wasser und gegebenenfalls weiteren Hilfsmitteln filtriert man mit einer Filtriervorrichtung mit Feinabtrennung im Bereich von 1 bis 0,5 µm und erhält die erfindungsgemäßen Ink-Jet-Tinten.

Ein weiterer Aspekt der vorliegenden Erfindung ist ein Verfahren zum Bedrucken von flächigen oder dreidimensional gestalteten Substraten nach dem Ink-Jet-Verfahren.

Dazu druckt man die erfindungsgemäßen Farbmittelzubereitungen oder die erfindungsgemäßen Ink-Jet-Tinten auf das Substrat auf und fixiert den erhaltenen Druck anschließend optional.

Beim Ink-Jet-Verfahren werden die üblicherweise wässrigen Tinten in kleinen Tröpfchen direkt auf das Substrat gesprüht. Man unterscheidet dabei ein kontinuierliches Verfahren, bei dem die Tinte gleichmäßig durch eine Düse gepresst und durch ein elektrisches Feld, abhängig vom zu druckenden Muster, auf das Substrat gelenkt wird, und ein unterbrochenes Tintenstrahl- oder "Drop-on-Demand"-Verfahren, bei dem der Tintenausstoß nur dort erfolgt, wo ein farbiger Punkt gesetzt werden soll. Bei dem letztgenannten Verfahren wird entweder über einen piezoelektrischen Kristall oder eine beheizte Kanüle (Bubble- oder Thermo-Jet-Verfahren) Druck auf das Tintensystem ausgeübt und so ein Tintentropfen herausgeschleudert. Solche Verfahrensweisen sind in Text. Chem. Color, Band 19 (8), Seiten 23 bis 29, 1987, und Band 21 (6), Seiten 27 bis 32, 1989, beschrieben.

Besonders geeignet sind die erfindungsgemäßen Farbmittelzubereitungen als Tinten für das Bubble-Jet-Verfahren und für das Verfahren mittels eines piezoelektrischen Kristalls.

Üblicherweise werden die nach dem Ink-Jet-Verfahren bedruckten Flächen mit Wärme behandelt, um die Farbstoffe zu fixieren und zu entwickeln. Die wärmeeinwirkung kann beispielsweise mit Wasserdampf oder Heißdurchgeführt werden. Ein üblicher Temperaturbereich ist 160 bis 180 °C für 5 bis 8 Minuten. Bei Heißluft empfiehlt sich, das bedruckte Textil bei 180 bis 200 °C während 1 Minute zu behandeln.

In einer weiteren Ausführungsform der vorliegenden Erfindung nimmt man eine Entwicklung durch Einwirkung von IR- oder Mikrowellenstrahlung oder von energiereicher elektromagnetischer Strahlung vor.

Die erfindungsgemäßen Farbmittelzubereitungen können auf alle Arten von Substratmaterialien gedruckt werden. Als Substratmaterialien seien z.B.
- cellulosehaltige Materialien wie Papier, Pappe, Karton, Holz und Holzwerkstoffe, die auch lackiert oder anderweitig beschichtet sein können,
- metallische Materialien wie Folien, Bleche oder Werkstücke aus Aluminium, Eisen, Kupfer, Silber, Gold, Zink oder Legierungen dieser Metalle, die lackiert oder anderweitig beschichtet sein können,
- polymere Materialien jeder Art wie Polystyrol, Polyamide, Polyester, Polyethylen, Polypropylen, Melaminharze, Polyacrylate, Polyacrylnitril, Polyurethane, Polycarbonate, Polyvinylchlorid, Polyvinylalkohole, Polyvinylacetate, Polyvinylpyrrolidone und entsprechende Copolymere und Blockcopolymere, biologisch abbaubare Polymere und natürliche Polymere wie Gelatine,
- silikatische Materialien wie Glas, Porzellan und Keramik, die mit polymeren Materialien beschichtet sind, wobei die polymeren Materialien oben definiert sind,
- textile Materialien wie Fasern, Garne, zwirne, Maschenware, Webware, Non-wovens und konfektionierte Ware aus Polyester, modifiziertem Polyester, Polyestermischgewebe, cellulosehaltige Materialien wie Baumwolle, Baumwollmischgewebe, Jute, Flachs, Hanf und Ramie, Viskose, Wolle, Seide, Polyamid, Polyamidmischgewebe, Polyacrylnitril, Triacetat, Acetat, Polycarbonat, Polypropylen, Polyvinylchlorid, Polyestermikrofasern und Glasfasergewebe,
- Leder, sowohl Naturleder als auch Kunstleder, als Glatt-, Nappa- oder Velourleder,
- Lebensmittel und Kosmetik
genannt. Bevorzugt sind als Substratmaterialien Textilien, insbesondere aus Polyester oder Polyamiden oder Mischungen untereinander oder mit Baumwolle, Polyvinylacetate und Polyacrylnitril. Ganz besonders bevorzugt sind Polyester.

Das Substratmaterial kann dabei flächig oder dreidimensional gestaltet sein und sowohl vollflächig als auch bildmäßig mit den erfindungsgemäßen Farbmittelzubereitungen bedruckt werden.

Die erfindungsgemäßen Farbmittelzubereitungen zeichnen sich bei der Verwendung in oder als Ink-Jet-Tinten mit insgesamt vorteilhaften Anwendungseigenschaften, vor allem gutem Anschreibverhalten und gutem Dauerschreibverhalten (Kogation) aus sowie, insbesondere bei Verwendung der besonders bevorzugten Kombination mit Polytetrahydrofuran, ausgezeichnetem Stand. Besonders geeignet sind sie zum Drucken auf gestrichenes und ungestrichenes Papier sowie von ganz besonders von Textil.

Ein weiterer Aspekt der vorliegenden Erfindung sind Tintensätze für das Ink-Jet-Verfahren, bestehend aus mehreren, speziell mindestens zwei und insbesondere mindestens drei verschiedenfarbigen Tinten und umfassend mindestens eine Tinte auf Basis der erfindungsgemäßen Farbmittelzubereitungen. Bevorzugt umfassen die erfindungsgemäßen Tintensätze mindestens zwei verschiedenfarbige Tinten auf Basis der erfindungsgemäßen Farbmittelzubereitungen und besonders bevorzugt mindestens drei verschiedenfarbige Tinten auf Basis der erfindungsgemäßen Farbmittelzubereitungen. Insbesondere umfassen die erfindungsgemäßen Tintensätze je eine cyanfarbene, eine gelbe und eine magentafarbene Tinte auf Basis der erfindungsgemäßen Farbmittelzubereitungen. Die erfindungsgemäßen Tintensätze eignen sich insbesondere zum Bedrucken von Substraten nach dem Ink-Jet-Verfahren.

Eine weitere Ausführungsform der vorliegenden Erfindung sind textile Substrate, die nach einem der oben genannten erfindungsgemäßen Verfahren bedruckt wurden und sich durch besonders scharf gedruckte Bilder oder Zeichnungen auszeichnen.

Schließlich wurde festgestellt, dass sich die erfindungsgemäßen Farbmittelzubereitungen und die erfindungsgemäßen Tinten besonders gut für den Tintenstrahldruck nach dem Transferverfahren eignen. Beim Transferdruckverfahren wird zunächst das Bild auf ein Trägermaterial gedruckt, beispielsweise auf Papier, insbesondere speziell für dieses Verfahren hergestelltes Papier der Firmen Coldenhove (Niederlande) und Cam Tenero (Schweiz), und von dort mit Hilfe von Wärme auf Substrate, beispielsweise aus Textil, übertragen. Eine weitere Ausführungsform der vorliegenden Erfindung sind daher ein Verfahren zum Bedrucken von Substraten, bevorzugt textilen Substraten, nach dem Transferdruckverfahren unter Verwendung der erfindungsgemäßen Farbmittelzubereitungen oder Tinten sowie Substrate, bevorzugt textile Substrate, bedruckt nach dem Transferdruckverfahren unter Verwendung der erfindungsgemäßen Farbmittelzubereitungen oder Tinten. Die Tinten oder Farbmittelzubereitungen für den Transferdruck werden vorzugsweise auf Basis eines Dispersfarbstoffes hergestellt. Besonders bevorzugt werden die Tinten für den Transferdruck auf Basis der folgenden Farbmittel hergestellt:
Disperse Yellow 54,
Disperse Red 11, 60,
Disperse Blue 72, 289, 326, 332, 347, 359;
Disperse Violet 17.

### Beispiele

### Herstellung erfindungsgemäßer Farbmittelzubereitungen

### 1. Schritt: Herstellung des Dispergiermittels C2-A

Das Dispergiermittel C2-A wurde wie in US 5,186,846 als "Dispersant 4" beschrieben hergestellt.

Eine Crackerfraktion der folgenden Zusammensetzung (Tabelle 1a) dienste als Ausgangsmaterial:

**Tabelle 1a**

| | Gew.-% in der Aromatenfraktion |
|---|---|
| Naphthalin | 54,60 |
| 2-Methylnaphthalin | 14,00 |
| 1-Methylnaphthalin | 8,30 |
| Inden | 8,40 |
| Diphenyl | 3,20 |
| Methylinden | 1,95 |
| Acenaphthen | 1,70 |
| Fluoren | 1,30 |
| Indan | 1,22 |
| Phenanthren | 1,10 |
| Methylindan (Isomerengemisch) | 1,13 |
| Ethylnaphthalin (Isomerengemisch) | 0,90 |
| para- und meta-Xylol | 0,80 |
| Tetralin | 0,80 |
| Styrol | 0,60 |

128 g der Crackerfraktion wurden mit 25 g Benzoesäure gemischt und in einem Kessel auf 90°C erwärmt. Danach wurden 107 g Oleum mit 65 Gew.-% SO₃ über einen Zeitraum von 2 Stunden zugefügt, wobei darauf geachtet wurde, dass die Temperatur nicht über 95°C stieg. Nach beendeter Oleumzugabe wurde auf 140°C erhitzt und bei dieser Temperatur etwa 3 ½ Stunden gerührt. Anschließend wurde auf 80°C abgekühlt, 150 ml Wasser wurden zugegeben und danach 50 g einer 30 Gew.-% Formalinlösung. Die einsetzende Kondensationsreaktion wurde über einen Zeitraum von 8 Stunden bei 100°C fortgesetzt.

Danach wurde ½ 1 Wasser zugefügt, gefolgt von 131 g einer 50 Gew.-% wässriger Natronlauge. Die Mischung wurde bei einer Temperatur von 90°C eine Stunde lang gerührt. Anschließend wurden weitere 365 ml Wasser zugefügt und mit Hilfe von 20 Gew.-% H₂SO₄ ein pH von 8,4 eingestellt. Schließlich wurde das Produkt C2-B durch Sprühtrocknen über einen Sprühturm isoliert.

Das Produkt wies die folgenden charakteristischen Parameter auf: α- : β-Naphthalinsulfonsäure 1 : 4,5, Gehalt an Na₂SO₄: 1,5 Gew.-%.

### 2. Schritt: Herstellung der Mixkomponente

In einem Dissolver wurden 12,5 g Tectilon Blau Base 6G (kommerziell erhältlich bei Ciba Specialties) mit 6,25 g Pluriol E 400® (kommerziell erhältlich von BASF Aktiengesellschaft), Dispergiermittel C2-A, 0,3 g Biocid A und 0,4 g Biocid B mit 0,5 g Triethanolamin vermischt und mit 67,55 ml vollentsalztem Wasser aufgefüllt. Diese Mischung wurde über einen Zeitraum von 5 Stunden in einer Kugelmühle vermahlen, bis der maximale Teilchendurchmesser 1 µm betrug.

Die Zusammensetzung dieser und weiterer analog hergestellter Mixkomponenten geht aus Tabelle 2 hervor. Alle Einsatzstoffe sind in Gramm angegeben.

**Tabelle 2:**

| Einsatzstoff | Türkis | Gelb | Rot | Blau 1 | Blau 2 |
|---|---|---|---|---|---|
| Inthratherm Blue P-305 NT¹ | | | | | 12,5 |
| Chinonblau PM² | | | | 12,5 | |
| Palanil Rot BFW-L³ | | | 15 | | |
| Palanil® Gelb 3GE² | | 15 | | | |
| Tectilon® Blau | 12,5 | | | | |
| Pluriol E 400 | 6,25 | 15 | 7,5 | 12,5 | 12,5 |
| C2-A | 12,5 | 7,5 | 15 | 6,25 | 6,25 |
| Biocid A | 0,3 | 0,4 | 0,4 | 0,3 | 0,3 |
| Biocid B | 0,4 | 0,5 | 0,5 | 0,4 | 0,4 |
| Triethanolamin | 0,5 | 0,5 | 0,5 | 0,5 | 0,5 |
| VE-Wasser | 67,55 | 61,1 | 61,1 | 67,55 | 67,55 |

| | | | | | |
|---|---|---|---|---|---|
| ¹: kommerziell erhältlich bei Crompton & Knowles | | | | | |
| ²: kommerziell erhältlich bei Dystar GmbH | | | | | |
| ³: kommerziell erhältlich bei Advance | | | | | |

### 3. Schritt: Formulierung der Tinte

In einem Becherglas wurde 17,78 g einer nach 2. hergestellten türkisfarbenen Mixkomponente mit 9 g Glycerin, 5 g Pluriol E 400®, 1,75 g Pluriol E 4000®, 5 g 1,2-Hexandiol, 0,5 g Biocid D und 0,3 g Tego Wet 260® und 60,7 ml VE-Wasser vermischt.

Die Zusammensetzungen weiterer Tinten gehen aus Tabelle 3 (siehe unten) hervor. Bei Tinte 3 handelt es sich um einen Vergleichsversuch.

### 4. Schritt

Die im 3. Schritt erhaltene Tinte wurde mit einem Piezodrucker Epson Stylus Color 3000 auf DIN A3-Papier verdruckt. Es wurden Drucke mit vorzüglicher Schärfe der Linien erhalten. Auch nach 40 Blatt Papier war keine Düse ausgefallen, desgleichen nach 5 m² Druck. Nach Stehenlassen über 6 Tage bei Raumtemperatur wurden ebenfalls vorzügliche Drucke ohne Streifen erzeugt.

**Tabelle 3:**

| Formulierungen von Tinten | | | |
|---|---|---|---|
| Bestandteil | Tinte 1 (Türkis) | Tinte 2 (Türkis) | Vergleichsversuch: Tinte 3 (Türkis) |
| Mixkomponente | 17,78 türkis | 17,78 türkis | 17,78 türkis |
| Pluriol E 400 | 5 | 5 | 5 |
| Pluriol E 4000 | 1,75 | 1,75 | 1,75 |
| Glycerin | 9 | 9 | 9 |
| 1,2-Hexandiol | 5 | | |
| 1,2-Pentandiol | | 5 | |
| Biocid D | 0,5 | 0,5 | 0,5 |
| Tego Wet 260 | 0,3 | 0,3 | |
| VE-Wasser | 62,42 | 62,42 | 65,97 |
| | Gut druckbare Tinte | Gut druckbare Tinte | Auf 1. Testseite Ausfall der Düsen, kein weiteres Drukken möglich |

Dabei bedeuten:

| | |
|---|---|
| Biocid A | 50 Gew.-% wässrige Lösung von Glutaraldehyd |
| Biocid B | 4 Gew.-% wässrige Lösung von Tetramethylolacetylendiharnstoff |
| Biocid C | 20 Gew.-% Lösung von 1,2-Benzisothiazolon-3-on in wässrigem Ethylenglykol |
| Biocid D | 10% Gew.-% Lösung von 1,2-Benzisothiazolon-3-on in wässrigem Propylenglykol |

## Patentansprüche

1. Farbmittelzubereitungen, enthaltend
a) mindestens einen dispergierten, in Wasser schwerlöslichen Farbstoff,
b) Wasser,
c) mindestens ein Dispergiermittel
d) eine Verbindung der allgemeinen Formel I 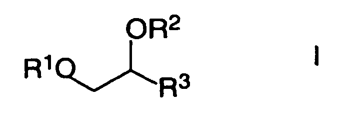
wobei in Formel I die Variablen wie folgt definiert sind:
R¹, R² unabhängig voneinander ausgewählt aus Wasserstoff, (CH₂-CH₂-O)ₙH oder (CH(CH₃)-CH₂-O)ₙ-H, wobei n eine ganze Zahl von 1 bis 8 ist; (CH₂-CH₂-O)ₐ-(CH(CH₃)-CH₂-O)_{b}-(CH₂-CH₂-O)_{c}-(CH(CH₃)-CH₂-O)_{d}-H, wobei a, b, c, d ganze Zahlen von 0 bis 7 sind und a + b + c + d ≤ 9.
R³ ausgewählt aus
geradkettigen C₂-C₆-Alkyl,
C₆-C₁₄ Aryl, gleich oder verschieden substituiert mit Wasserstoff oder C₁-C₈-Alkyl
CH₂-O-R⁴ mit
R⁴ ausgewählt aus C₁-C₁₀-Alkyl.

2. Farbmittelzubereitung nach Anspruch 1, wobei R³ ausgewählt wird aus verzweigtem oder unverzweigtem C₂-C₆-Alkyl.

3. Farbmittelzubereitung nach Anspruch 1 oder 2, wobei R³ ausgewählt wird aus unverzweigtem C₂-C₄-Alkyl.

4. Farbmittelzubereitung nach den Ansprüchen 1 bis 3, wobei R¹ und R² jeweils Wasserstoff bedeuten.

5. Farbmittelzubereitung nach den Ansprüchen 1 bis 3, wobei R¹ und R² gewählt werden aus (CH₂-CH₂-O)ₙH oder (CH(CH₃)-CH₂-O)ₙ-H und n eine ganze Zahl von 1 bis 4 bedeutet.

6. Farbmittelzubereitung nach mindestens einem der Ansprüche 1 bis 5, **dadurch gekennzeichnet, dass** sie als weitere Komponente d) Polytetrahydrofuran enthält.

7. Farbmittelzubereitungen nach mindestens einem der Ansprüche 1 bis 6, **dadurch gekennzeichnet, dass** sie als Dispergiermittel c) Arylsulfonsäure-Formaldehyd-Kondensationsprodukte enthalten.

8. Farbmittelzubereitungen nach mindestens einem der Ansprüche 1 bis 7, **dadurch gekennzeichnet, dass** als Komponente a) einen Dispersfarbstoff enthalten.

9. Farbmittelzubereitungen nach mindestens einem der Ansprüche 1 bis 7, **dadurch gekennzeichnet, dass** als Komponente a) einen Solventfarbstoff enthalten.

10. Farbmittelzubereitungen nach mindestens einem der Ansprüche 1 bis 7, **dadurch gekennzeichnet, dass** als Komponente a) einen Küpenfarbstoff enthalten.

11. Verfahren zur Herstellung von Ink-Jet-Tinten unter Verwendung von Farbmittelzubereitungen nach mindestens einem der Ansprüche 1 bis 10.

12. Tintensätze für das Ink-Jet-Verfahren, bestehend aus mehreren verschiedenfarbigen Tinten und umfassend mindestens eine Tinte auf Basis der Farbmittelzubereitungen nach Anspruch 1 bis 10.

13. Verfahren zum Bedrucken von flächigen oder dreidimensional gestalteten Substraten, insbesondere von textilen Substraten, nach dem Ink-Jet-Verfahren unter Verwendung von Farbmittelzubereitungen nach den Ansprüchen 1 bis 10 oder Ink-Jet-Tinten nach Anspruch 11 und anschließender optionaler Fixierung.

14. Verfahren nach Anspruch 13, **dadurch gekennzeichnet, dass** man die Entwicklung mit Hilfe von IR- oder Mikrowellenstrahlung vornimmt.

15. Verfahren zum Bedrucken von Substraten nach dem Transferdruckverfahren unter Verwendung von Farbmittelzubereitungen nach mindestens einem der Ansprüche 1 bis 10 oder von Tinten nach Anspruch 11.

16. Substrate, bedruckt nach einem Verfahren nach mindestens einem der Ansprüche 13 bis 15.

17. Verbindungen der allgemeinen Formel I, 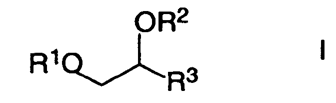 in denen die Reste wie folgt definiert sind:
R¹, R² unabhängig voneinander ausgewählt aus (CH₂-CH₂-O)ₙH oder (CH(CH₃)-CH₂-O)ₙ-H, wobei n eine ganze Zahl von 1 bis 8, bevorzugt von 1 bis 4 ist; (CH₂-CH₂-O)ₐ-(CH (CH₃)-CH₂-O)_{b}-(CH₂-CH₂-O)_{c}- (CH (CH₃)-CH₂-O)_{d}-H, wobei a, b, c, d ganze Zahlen von 0 bis 7 sind und a + b + c + d ≤ 9;
R³ geradkettiges C₂-C₄-Alkyl.

## Claims

1. Colorant preparations comprising
a) at least one dispersed, substantially water-insoluble dye,
b) water,
c) at least one dispersant,
d) a compound of the general formula I 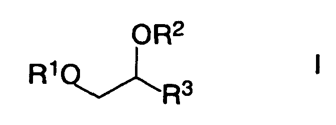 where
R¹, R² are independently selected from hydrogen, (CH₂-CH₂-O)ₙH or (CH(CH₃)-CH₂-O)ₙ-H, where n is an integer from 1 to 8,
(CH₂-CH₂-O)ₐ-(CH(CH₃)-CH₂-O)_{b}-(CH₂-CH₂-O)_{c}-(CH(CH₃)-CH₂-O)_{d}-H, where a, b, c, d are each an integer from 0 to 7 and a + b + c + d ≤ 9,
R³ is selected from
straight-chain C₂-C₆-alkyl,
C₆-C₁₄ aryl, identically or differently substituted by hydrogen or C₁-C₈-alkyl
CH₂-O-R⁴ where
R⁴ is selected from C₁-C₁₀-alkyl.

2. A colorant preparation as claimed in claim 1, wherein R³ is selected from branched or unbranched C₂-C₆-alkyl.

3. A colorant preparation as claimed in claim 1 or 2, wherein R³ is selected from unbranched C₂-C₄-alkyl.

4. A colorant preparation as claimed in any of claims 1 to 3, wherein R¹ and R² are each hydrogen.

5. A colorant preparation as claimed in any of claims 1 to 3, wherein R¹ and R² are selected from (CH₂-CH₂-O)ₙH or (CH(CH₃)-CH₂-O)ₙ-H and n is an integer from 1 to 4.

6. A colorant preparation as claimed in at least one of claims 1 to 5, wherein component d) is polytetrahydrofuran.

7. Colorant preparations as claimed in at least one of claims 1 to 6, wherein dispersant c) comprises arylsulfonic acid-formaldehyde condensation products.

8. Colorant preparations as claimed in at least one of claims 1 to 7, wherein component a) is a disperse dye.

9. Colorant preparations as claimed in at least one of claims 1 to 7, wherein component a) is a solvent dye.

10. Colorant preparations as claimed in at least one of claims 1 to 7, wherein component a) is a vat dye.

11. A process for preparing ink jet inks, which comprises utilizing colorant preparations as claimed in at least one of claims 1 to 10.

12. An ink set for the ink jet process, made up of a plurality of differently colored inks and comprising at least one ink based on colorant preparations as claimed in any of claims 1 to 10.

13. The process for printing sheetlike or three-dimensionally configured substrates, especially textile substrates, by the ink jet process using colorant preparations as claimed in any of claims 1 to 10 or ink jet inks as claimed in claim 11 and subsequent optional fixation.

14. The process of claim 13, wherein development is effected using IR or microwave radiation.

15. The process for printing substrates by the transfer printing process using colorant preparations as claimed in at least one of claims 1 to 10 or inks as claimed in claim 11.

16. Substrates printed by a process as claimed in at least one of claims 13 to 15.

17. Compounds of the general formula I, 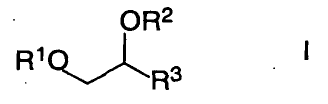 where
R¹, R² are independently selected from (CH₂-CH₂-O)ₙH or (CH(CH₃)-CH₂-O)ₙ-H, where n is an integer from 1 to 8, preferably from 1 to 4, (CH₂-CH₂-O)ₐ-(CH(CH₃)-CH₂-O)_{b}-(CH₂-CH₂-O)_{c}-(CH(CH₃)-CH₂-O)_{d}-H, where a, b, c, d are each an integer from 0 to 7 and a + b + c + d ≤ 9;
R³ is straight-chain C₂-C₄-alkyl.

## Revendications

1. Compositions colorantes contenant
a) au moins un colorant difficilement soluble dans l'eau, dispersé,
b) de l'eau,
c) au moins un agent dispersant,
d) un composé de la formule générale I : 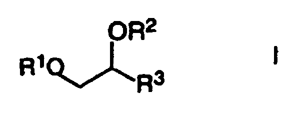
dans laquelle les variables sont définies comme suit :
R¹, R² sont, indépendamment l'un de l'autre, choisis parmi de l'hydrogène, (CH₂-CH₂-O)ₙH ou (CH(CH₃)-CH₂-O)ₙ-H, où n est un nombre entier de 1 à 8 ; (CH₂-CH₂-O)ₐ-(CH(CH₃)-CH₂-O)_{b}-(CH₂-CH₂-O)_{c}-(CH(CH₃)-CH₂-O)_{d}-H, où a, b, c, d sont des nombres entiers de 0 à 7 et a + b + c + d ≤ 9.
R³ est choisi parmi
un alkyle en C₂-C₆ linéaire,
un aryle en C₆-C₁₄, substitué de manière identique ou différente avec de l'hydrogène ou de l'alkyle en C₁-C₈,
CH₂-O-R⁴, où
R⁴ représente un alkyle en C₁-C₁₀.

2. Composition colorante suivant la revendication 1, dans laquelle R³ est choisi parmi de l'alkyle en C₂-C₆ ramifié ou non ramifié.

3. Composition colorante suivant la revendication 1 ou 2, dans laquelle R³ représente un alkyle en C₂-C₄ non ramifié.

4. Composition colorante suivant les revendications 1 à 3, dans laquelle R¹ et R² représentent chacun de l'hydrogène.

5. Composition colorante suivant les revendications 1 à 3, dans laquelle R¹ et R² sont choisis parmi (CH₂-CH₂-O)ₙH ou (CH(CH₃)-CH₂-O)ₙ-H et n est un nombre entier de 1 à 4.

6. Composition colorante suivant au moins l'une des revendications 1 à 5, **caractérisée en ce qu'**elle contient, comme autre composant d), du polytétrahydrofuranne.

7. Compositions colorantes suivant au moins l'une des revendications 1 à 6, **caractérisées en ce qu'**elles contiennent, comme agent dispersant c), des produits de condensation d'acide arylsulfoniqueformaldéhyde.

8. Compositions colorantes suivant au moins l'une des revendications 1 à 7, **caractérisées en ce qu'**elles contiennent, comme composant a), un colorant de dispersion.

9. Compositions colorantes suivant au moins l'une des revendications 1 à 7, **caractérisées en ce qu'**elles contiennent, comme composant a), un colorant à solvant.

10. Compositions colorantes suivant au moins l'une des revendications 1 à 7, **caractérisées en ce qu'**elles contiennent, comme composant a), un colorant de cuve.

11. Procédé de préparation d'encres pour jet d'encre, par utilisation de compositions colorantes suivant au moins l'une des revendications 1 à 10.

12. Jeux d'encres pour le procédé à jet d'encre, constitués de plusieurs encres de couleurs différentes et comprenant au moins une encre à base des compositions colorantes suivant les revendications 1 à 10.

13. Procédé d'impression de substrats plats ou façonnés en trois dimensions, en particulier de substrats textiles, suivant le procédé à jet d'encre, par utilisation de compositions colorantes suivant les revendications 1 à 10 ou d'encres pour jet d'encre suivant la revendication 11 et par une éventuelle fixation ultérieure.

14. Procédé suivant la revendication 13, **caractérisé en ce qu'**on effectue le développement à l'aide d'un rayonnement IR ou à micro-ondes.

15. Procédé d'impression de substrats selon le procédé par transfert, par utilisation de compositions colorantes suivant au moins une des revendications 1 à 10 ou d'encres suivant la revendication 11.

16. Substrats imprimés selon un procédé suivant au moins une des revendications 13 à 15.

17. Composés de la formule générale I : 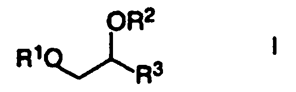 dans laquelle les radicaux sont définis de la manière suivante :
R¹, R² sont, indépendamment l'un de l'autre, choisis parmi (CH₂-CH₂-O)ₙH ou (CH(CH₃)-CH₂-O)ₙ-H, où n est un nombre entier de 1 à 8, de préférence de 1 à 4 ;
(CH₂-CH₂-O)ₐ-(CH (CH₃)-CH₂-O)_{b}-(CH₂-CH₂-O)_{c}(CH(CH₃)-CH₂-O)_{d}-H, où a, b, c, d sont des nombres entiers de 0 à 7 et a + b + c + d ≤ 9 ;
R³ est un alkyle en C₂-C₄ linéaire.
